# EUROPÄISCHE PATENTANMELDUNG

(11) **EP 4 606 950 A2**
(43) Veröffentlichungstag der Anmeldung: **27.08.2025**
(21) Anmeldenummer: 25182103.9
(22) Anmeldetag: 31.03.2023
(51) Int. Cl.: E01C 13/08

(54) **VERFAHREN ZUR HERSTELLUNG EINES KUNSTRASENS**

(62) Teilanmeldung aus: 23165936.8
(71) Anmelder: Tarkett Sports Canada Inc., Montréal, Québec H4T 1G2 (CA)
(72) Erfinder: MORTON-FINGER, Jürgen, 69469 Weinheim (DE); BERGHAUS, Ulrich, 53844 Troisdorf (DE); RANDALL, Gregory T., Dalton, 30720 (US); METZ, Thomas, 69483 Wald-Michelbach (DE)
(74) Vertreter: Betten & Resch

(57) **Zusammenfassung**

Ein Verfahren zur Herstellung eines Kunstrasens, umfassend die Schritte: Bereitstellen eines Trägermaterials mit einer Oberseite und einer Unterseite, Bereitstellen von einer Vielzahl von Fasern, wobei jede Faser zwei Enden umfasst, welche sich von der Oberseite des Trägermaterials erstrecken, und einen verbundenen Bereich umfasst, welcher an der Unterseite des Trägermaterials schlaufenartig angeordnet ist, Zuführen des Trägermaterials mit den Fasern zu einer beheizten rotierenden Kalanderwalze, Führen des Trägermaterials mit den Fasern über zumindest einen Teilbereich der Oberfläche der beheizten rotierenden Kalanderwalze, wobei die verbundenen Bereiche der Fasern und die Unterseite des Trägermaterials der Kalanderwalze zugewandt sind, während des Führens des Trägermaterials mit den Fasern über den zumindest einen Teilbereich der Oberfläche der beheizten rotierenden Kalanderwalze: Übertragen von Wärme von der beheizten rotierenden Kalanderwalze zu dem Trägermaterial mit den Fasern, und Verschmelzen der verbundenen Bereiche der Fasern mit der Unterseite des Trägermaterials zu dem Kunstrasen, sowie Prägen einer Unterseite des Kunstrasens.

## Beschreibung

### Gebiet der Erfindung

Die vorliegende Erfindung betrifft einen Kunstrasen sowie ein Verfahren zu seiner Herstellung.

### Hintergrund

Aus der US 2020/0223196 A1 ist ein Teppich mit Flüssigkeitssperreigenschaften bekannt. Der Teppich umfasst: (a) eine graue Ware, umfassend: i) ein primäres Trägermaterial mit einer Vorderseite und einer Rückseite; ii) eine Mehrzahl von Fasern, die an dem primären Trägermaterial befestigt sind, wobei sich ein Teil der Mehrzahl von Fasern von der Vorderseite des primären Trägermaterials erstreckt und wobei ein zweiter Teil der Mehrzahl von Fasern auf der Rückseite des primären Trägermaterials in Form von Rückenstichen freiliegt; b) eine Klebstoffschicht, die eine Heißschmelzklebstoffzusammensetzung umfasst, die auf die Rückseite des primären Trägermaterials aufgebracht ist, wobei die Klebstoffzusammensetzung so konfiguriert ist, dass sie mindestens einen Teil der hinteren Stiche im Wesentlichen einkapselt; und c) eine laminierte Folie mit Flüssigkeitssperreigenschaften.

Aus der EP 20 192 846.2 und der WO 2022/043231 ist ein Verfahren zur Herstellung eines Kunstrasens bekannt, welches die folgenden Schritte umfasst: Bereitstellen eines Trägermaterials mit einer Oberseite und einer Unterseite, Bereitstellen von einer Mehrzahl von Fasern, wobei jede Faser zwei Enden umfasst, welche sich von der Oberseite des Trägermaterials erstrecken, und einen verbundenen Bereich umfasst, welcher an der Unterseite des Trägermaterials schlaufenartig angeordnet ist, Zuführen des Trägermaterials mit den Fasern zu einer beheizten rotierenden Kalanderwalze, Führen des Trägermaterials mit den Fasern über zumindest einen Teilbereich der Oberfläche der beheizten rotierenden Kalanderwalze, wobei die verbundenen Bereiche der Fasern und die Unterseite des Trägermaterials der Kalanderwalze zugewandt sind, während des Führens des Trägermaterials mit den Fasern über den zumindest einen Teilbereich der Oberfläche der beheizten rotierenden Kalanderwalze: Übertragen von Wärme von der beheizten rotierenden Kalanderwalze zu dem Trägermaterial mit den Fasern, und Verschmelzen der verbundenen Bereiche der Fasern mit der Unterseite des Trägermaterials zu dem Kunstrasen, und Abführen und Abkühlen des Kunstrasens.

Bei herkömmlichen Kunststoff-Kunstrasen können bei hohen Temperaturen Verformungen des Kunstrasens auftreten. Diese Verformungen sind üblicherweise im Wesentliche reversibel. Solche Verformungen können beispielsweise bereits bei Kunstrasentemperaturen von 35 °C oder höher auftreten, und sich bei geringeren Temperaturen wieder im Wesentlichen zurückbilden. Insbesondere bei hohen Umgebungstemperaturen, beispielsweise bei direkter Sonneneinstrahlung, kann sich ein Kunstrasen jedoch auch wesentlich weiter aufheizen, beispielsweise auf Temperaturen von 50°C, 60°C, 70°C, 80°C oder höher. Die Verformungen sind üblicherweise bei höheren Temperaturen stärker ausgeprägt.

Insbesondere kann Kunstrasen, der recyceltes Material (zum Beispiel alten Kunstrasen, auch "end-of-life (EOL) turf" genannt) als Sekundärrohstoff bzw. Sekundärwerkstoff enthält, gegenüber konventionellem Kunstrasen ohne recyceltes Material eine erhöhte Steifigkeit aufweisen und besonders anfällig für Verformungen sein.

Verformungen des Kunstrasens wie Wellenbildungen können die Funktionalität des Kunstrasens beeinflussen und werden daher als nachteilig angesehen. So verändern Verformungen häufig charakteristische Eigenschaften des Kunstrasens. Generell wird angestrebt, dass sich die charakteristischen Eigenschaften eines Kunstrasens unter unterschiedlichen Bedingungen, wie unterschiedlichen Temperaturen, jedoch nicht verändern. Die Unebenheit eines verformten Kunstrasens kann beispielsweise zu verändertem Spring- und Rollverhalten eines Balls führen. Weiterhin kann eine häufige Verformung des Kunstrasens zu schnellerer Materialermüdung und einem kürzeren Lebenszyklus des Kunstrasens führen.

Bei dem in der EP 20 192 846.2 und der WO 2022/043231 beschriebenen Kunstrasen können Fasern entweder einzeln oder in Bündeln an dem Trägermaterial angeordnet sein. Im dort beschriebenen Verfahren bilden sich durch das Verschmelzen benachbarter Faserbündel beziehungsweise benachbarter Fasern miteinander Reihen an der Unterseite des Kunstrasens, das heißt erhabene Bereiche. Die erhabenen Bereiche erstrecken sich entlang der Unterseite des Kunstrasens über eine Länge, die länger ist als ein durchschnittlicher Abstand zwischen zwei benachbarten Faserbündeln beziehungsweise zwei benachbarten Fasern. Die Reihen sind in den Figuren 5B-5C der EP 20 192 846.2 und den Figuren 10B-10C der WO 2022/043231 und den dazugehörigen Beschreibungspassagen beschrieben.

Bei dem Kunstrasen der EP 20 192 846.2 und der WO 2022/043231 können Verformungen des Kunstrasens bei Temperaturen von 35°C oder höher auch aufgrund der Reihen an der Unterseite des Kunstrasens, das heißt durch die erhabenen Bereiche, auftreten. Ein Temperaturanstieg, beispielsweise zu einer Temperatur im Bereich von über 35°C, führt generell zu einer Ausdehnung des Materials der Kunstrasens. In Reihenrichtung ist eine Ausdehnung des Materials der Reihen jedoch nicht möglich, sodass es zu Aufschiebungen kommen kann, die zu Wellenbildungen führen können.

Es ist daher eine Aufgabe der vorliegenden Erfindung, ein Verfahren zur Herstellung eines Kunstrasens mit guter Hitzebeständigkeit, das heißt Dimensionsstabilität auch bei hohen Temperaturen des Kunstrasens bereitzustellen, beispielsweise bei Temperaturen im Bereich von 35°C-80°C, mit dem Kunstrasen von hoher Qualität hergestellt werden kann. Es ist ferner eine Aufgabe der vorliegenden Erfindung, einen Kunstrasen bereitzustellen, der eine hohe Qualität und gute Hitzebeständigkeit aufweist und mit dem erfindungsgemäßen Verfahren hergestellt wird.

### Zusammenfassung

Diese Aufgabe wird erfindungsgemäß durch ein Verfahren zur Herstellung eines Kunstrasens und durch einen Kunstrasen gemäß der unabhängigen Ansprüche gelöst. Bevorzugte Ausführungsformen der Erfindung sind in den Unteransprüchen beschrieben.

Das erfindungsgemäße Verfahren umfasst die folgenden Schritte: Bereitstellen eines Trägermaterials mit einer Oberseite und einer Unterseite; Bereitstellen von einer Mehrzahl von Fasern, wobei jede Faser zwei Enden umfasst, welche sich von der Oberseite des Trägermaterials erstrecken, und einen verbundenen Bereich umfasst, welcher an der Unterseite des Trägermaterials schlaufenartig angeordnet ist; Zuführen des Trägermaterials mit den Fasern zu einer beheizten rotierenden Kalanderwalze; Führen des Trägermaterials mit den Fasern über zumindest einen Teilbereich der Oberfläche der beheizten rotierenden Kalanderwalze, wobei die verbundenen Bereiche der Fasern und die Unterseite des Trägermaterials der Kalanderwalze zugewandt sind; während des Führens des Trägermaterials mit den Fasern über den zumindest einen Teilbereich der Oberfläche der beheizten rotierenden Kalanderwalze: Übertragen von Wärme von der beheizten rotierenden Kalanderwalze zu dem Trägermaterial mit den Fasern, und Verschmelzen der verbundenen Bereiche der Fasern mit der Unterseite des Trägermaterials zu dem Kunstrasen; wobei das Verfahren weiterhin ein Prägen einer Unterseite des Kunstrasens umfasst, wobei das Prägen einen vertieften Bereich oder mehrere vertiefte Bereiche der Unterseite des Kunstrasens bildet; und Abführen und Abkühlen des Kunstrasens.

Ausführungen zu einem vertieften Bereich sind analog auf eine Mehrzahl von vertieften Bereichen anwendbar, und umgekehrt.

Die Begriffe Unterseite und Oberseite können sich auf eine Unter- und eine Oberseite beziehen, wenn der Kunstrasen bestimmungsgemäß angeordnet ist, also beispielsweise auf einer Ebene liegt, wobei freie Enden der Fasern nach oben zeigen, und verbundene Bereiche der Fasern nach unten zeigen.

Bilden eines vertieften Bereichs kann bedeuten, dass der Bereich nach dem Prägen gegenüber dem entsprechenden Bereich des Kunstrasens vor dem Prägen vertieft ist. Am vertieften Bereich ist es möglich, dass der Kunstrasen nicht durchbrochen ist, das heißt, dass es möglich ist, dass der Kunstrasen beispielsweise am vertieften Bereich keine Unterbrechung und/oder keine Durchbrechung und/oder keine Öffnung und/oder kein Loch hat. Vielmehr ist die Oberfläche des vertiefen Bereichs vertieft, also beispielsweise zurückgenommen. Mit anderen Worten: Im vertieften Bereich kann die Oberfläche des Kunstrasens ununterbrochen sein. Prägen von vertieften Bereichen kann den Vorteil haben, die strukturelle Integrität der Oberfläche einer Kunstrasenunterseite beizubehalten, was eine gute strukturelle Festigkeit des Kunstrasens ermöglichen kann.

Der Schritt des Prägens einer Unterseite des Kunstrasens kann während des Schritts des Verschmelzens der verbundenen Bereiche der Fasern mit der Unterseite des Trägermaterials zu dem Kunstrasen erfolgen.

Der Schritt des Prägens einer Unterseite des Kunstrasens kann nach dem Schritt des Verschmelzens der verbundenen Bereiche der Fasern mit der Unterseite des Trägermaterials zu dem Kunstrasen erfolgen.

Bei dem erfindungsgemäßen Verfahren ermöglicht ein Prägen der Unterseite des Kunstrasens eine gute Hitzebeständigkeit, das heißt Dimensionsstabilität bei Erwärmung. Diese wird dadurch erreicht, dass das Prägen einen oder mehrere vertiefte Bereiche der Unterseite des Kunstrasens bildet. Der vertiefte Bereich fungiert als ein freier Zwischenraum, in den hinein sich das Material des Kunstrasens bei Erwärmung ausdehnen kann, sodass sich der freie Zwischenraum bei Erwärmung verkleinert oder schließt. Somit werden Materialaufschiebungen bei Erwärmung, die sich ohne den freien Zwischenraum ergeben würden, vermieden oder reduziert. Damit werden Verwerfungen und/oder Wellenbildungen des Kunstrasens bei Erwärmung vermieden oder reduziert.

Bei dem erfindungsgemäßen Verfahren wird der Zusammenhalt zwischen den Fasern und dem Trägermaterial dadurch erzeugt, dass die Fasern direkt mit dem Trägermaterial an den verbundenen Bereichen der Fasern verschmolzen werden. Somit wird insbesondere ein einfacher, kompakter und stabiler Aufbau des Kunstrasens gewährleistet und es wird insbesondere keine zusätzliche Folie benötigt, um die Fasern mit dem Trägermaterial zu verbinden. Ferner kann dadurch der Materialverbrauch reduziert und die Recycelbarkeit des Kunstrasens erhöht werden, da der Kunstrasen weniger einzelne Komponenten enthält und die Verbindung zwischen Fasern und Trägermaterial ohne zusätzliche Komponenten erzeugt wird. Da lediglich das Trägermaterial mit der Mehrzahl von Fasern über die Kalanderwalze geführt werden und verschmolzen werden müssen, werden ebenfalls die Komplexität des Verfahrens und die Prozesszeit reduziert.

In einer bevorzugten Ausführungsform hat die Unterseite des Kunstrasens eine Hauptebene, wobei die Hauptebene der Unterseite des Kunstrasens eine Ebene ist, die einen oder mehrere Oberflächenbereiche der Unterseite des Kunstrasens, beispielsweise vor dem Prägen oder nach dem Prägen, enthält, wobei der eine oder die mehreren Oberflächenbereiche, die in der Hauptebene enthalten sind, eine Gesamtfläche haben, die mindestens 20 %, mindestens 30 %, mindestens 40 %, mindestens 50 %, mindestens 60 %, mindestens 70 %, mindestens 80 %, mindestens 90 %, oder 100 % der Gesamtfläche der Unterseite des Kunstrasens ist, und wobei der vertiefte Bereich vorzugsweise gegenüber der Hauptebene der Unterseite des Kunstrasens vertieft ist.

Dass ein Bereich an der Unterseite des Kunstrasens gegenüber einer Hauptebene der Unterseite und/oder der noch nicht geprägten Unterseite vertieft ist, kann bedeuten, dass er in Richtung der Oberseite des Kunstrasens vertieft ist, also "nach oben" vertieft ist.

Eine Hauptebene einer Unterseite des Kunstrasens kann durch die Unterseite vor dem Prägen definiert sein. Mit anderen Worten: Die Hauptebene kann eine Ebene sein, die einen oder mehreren Oberflächenbereiche der ungeprägten Unterseite des Kunstrasens umfasst beziehungsweise einen oder mehrere Oberflächebereiche der Unterseite des Kunstrasens vor dem Prägen. Der Begriff "ungeprägte Unterseite" kann "noch nicht geprägte Unterseite" beziehungsweise "nicht geprägte Unterseite" bedeuten.

Dass die Hauptebene einen Oberflächenbereich enthält, kann bedeuten, dass der Oberflächenbereich in der Hauptebene liegt. Oberflächen, beispielsweise eine Unterseite des Kunstrasens, die eine Hauptebene haben, werden im Folgenden auch als im Wesentlichen eben bezeichnet. Oberflächen, bei denen mindestens 90 % der Oberfläche, beispielsweise 100 % der Oberfläche, in der Hauptebene liegen, werden im Folgenden auch als eben bezeichnet. Dass der vertiefte Bereich vertieft ist, kann bedeuten, dass der vertiefte Bereich von der Hauptebene in Richtung der Oberseite des Kunstrasens, das heißt nach oben, vertieft ist.

Es können beispielsweise mindestens 1%, mindestens 5%, mindestens 10%, mindestens 20%, mindestens 25%, mindestens 30%, mindestens 40%, mindestens 50%, mindestens 60%, mindestens 70%, mindestens 80% oder mindestens 90% der Oberfläche der Unterseite des Kunstrasens gegenüber der Hauptebene der Unterseite und/oder gegenüber der noch nicht geprägten Unterseite vertieft sein. Es können beispielsweise mindestens 1%, mindestens 5%, mindestens 10%, mindestens 20%, mindestens 25%, mindestens 30%, mindestens 40%, mindestens 50%, mindestens 60%, mindestens 70%, mindestens 80% oder mindestens 90% einer Fläche einer Projektion der Oberfläche der Unterseite des Kunstrasens gegenüber der Hauptebene der Unterseite und/oder gegenüber der noch nicht geprägten Unterseite vertieft sein, wobei Projektion eine Projektion in einer senkrechten Richtung zu der Hauptebene ist, das heißt, die Oberfläche ohne Berücksichtigung vertikaler Oberflächenbereiche, die durch das Prägen entstehen, also beispielsweise Seitenwände von vertieften Bereichen.

Bereiche der Hauptebene beziehungsweise der noch nicht geprägten Unterseite, in der Bereiche der Oberfläche der Unterseite des Kunstrasens nach dem Prägen vertieft sind, können eine Gesamtfläche von beispielsweise mindestens 1%, mindestens 5%, mindestens 10%, mindestens 20%, mindestens 25%, mindestens 30%, mindestens 40%, mindestens 50%, mindestens 60%, mindestens 70%, mindestens 80% oder mindestens 90% der Fläche der Hauptebene enthalten.

Ein Bereich der Hauptebene beziehungsweise der noch nicht geprägten Unterseite, der einem einzelnen vertieften Bereich entspricht, kann beispielsweise eine Fläche von höchstens 1 cm^2 haben, oder höchstens 0,5 cm^2, oder höchstens 0,1 cm^2. Ein Bereich der Hauptebene beziehungsweise der noch nicht geprägten Unterseite, der einem einzelnen vertieften Bereich entspricht, kann beispielsweise eine Fläche von mindestens 1 cm^2 haben, oder mindestens 5 cm^2, oder mindestens 10 cm^2. Ein Bereich der Hauptebene beziehungsweise der noch nicht geprägten Unterseite, der einem einzelnen vertieften Bereich entspricht, kann beispielsweise eine Fläche haben, die dem durchschnittlichen Abstand, beispielsweise in Längsrichtung, zweier zueinander, beispielsweise in Längsrichtung, benachbarter Fasern/Faserbündel entspricht, oder einem bestimmten Vielfachen davon. Beispielsweise kann ein Bereich der Hauptebene beziehungsweise der noch nicht geprägten Unterseite, der einem einzelnen vertieften Bereich entspricht, eine Fläche haben, die höchstens dem 5-fachen des Quadrats des durchschnittlichen Abstands, beispielsweise in Längsrichtung, zweier zueinander, beispielsweise in Längsrichtung, benachbarter Fasern/Faserbündel entspricht, höchstens dem 3-fachen, höchstens dem 2-fachen, höchstens dem 1,5-fachen, höchstens dem 1-fachen, mindestens dem 0,5-fachen, oder mindestens dem 0,1-fachen. Ein Bereich der Hauptebene beziehungsweise der noch nicht geprägten Unterseite, der einem einzelnen vertieften Bereich entspricht, kann eine Länge und/oder eine Breite von mindestens 5 cm haben, höchstens 2 cm, höchstens 1 cm oder höchstens 0,5 cm. Ein Bereich der Hauptebene beziehungsweise der noch nicht geprägten Unterseite, der einem einzelnen vertieften Bereich entspricht, kann eine Länge und/oder eine Breite von mindestens 0,5 cm haben, mindestens 1 cm, oder mindestens 2cm.

Die Längsrichtung kann eine Richtung bezeichnen, in der der Kunstrasen aufgerollt wird und/oder in der das Trägermaterial mit den Fasern über die Kalanderwalze geführt wird.

Ein Bereich der Hauptebene, der einem einzelnen vertieften Bereich entspricht, kann die Form von Polygonen haben, beispielsweise Trigone, Tetragone, Pentagone, Hexagone, Heptagone. Ein Bereich der Hauptebene, der einem einzelnen vertieften Bereich entspricht, kann die Form von Dreiecken, Rechtecken, Kreisen oder Ellipsen haben. Ein Bereich der Hauptebene, der einem einzelnen vertieften Bereich entspricht, kann die Form von Kreuzen oder Sternen haben. Dass ein Bereich der Hauptebene, der einem einzelnen vertieften Bereich entspricht, eine bestimmte Form hat, kann bedeuten, dass auch der vertiefte Bereich diese Form hat.

Kreuz- und/oder sternförmige vertiefte Bereiche können besonders bevorzugt sein, weil sie im Verhältnis zur Gesamtfläche eine große Randfläche haben, an der sich das Material des Kunstrasens ausdehnen kann. Auf diese Weise können solche Formen von vertieften Bereichen eine besonders gute Hitzebeständigkeit ermöglichen.

Der vertiefte Bereich kann eine Rillenform haben, also beispielsweise eine Länge haben, die wesentlich größer ist als eine Breite, also beispielsweise die Form eines langgezogenen vertieften Rechtecks. Ein vertiefter Bereich in Rillenform kann eine Länge haben, die den durchschnittlichen Abstand, beispielsweise in Längsrichtung, zweier zueinander, beispielsweise in Längsrichtung, benachbarter Faserbündel übersteigt, beispielsweise mindestens das Fünffache eines durchschnittlichen Abstands ist, mindestens das Zehnfache, mindestens das Fünfzigfache, mindestens das Hundertfache, oder mindestens das Tausendfache. Die Länge des vertieften Bereichs kann mindestens das Zweifache einer Breite des vertieften Bereichs sein, mindestens das Fünffache, mindestens das Zehnfache, mindestens das Fünfzigfache, mindestens das Hundertfache, oder mindestens das Tausendfache. Beispielsweise kann sich der vertiefte Bereich in der Form einer Rille entlang der Unterseite des Kunstrasens erstrecken, also beispielsweise von einem Rand der Unterseite des Kunstrasens zu einem gegenüberliegendem Rand. Der vertiefte Bereich kann eine Länge haben, die mindestens 50%, mindestens 70%, oder mindestens 90% einer Seitenlänge einer Bahn des Kunstrasens ist. Der vertiefte Bereich kann in einer Längsrichtung und/oder in einer Querrichtung und/oder in einer Schrägrichtung zur Längs- und zur Querrichtung geprägt sein. Quer kann eine Richtung bezeichnen, die rechtwinklig zu einer Längsrichtung ist. Schräg kann eine Richtung bezeichnen, die gegenüber einer anderen Richtung einen Winkel hat, der betragsmäßig größer als 0° und kleiner als 90° ist, beispielsweise zwischen 15° und 75°, oder zwischen 30° und 60°.

Vertiefte Bereiche in Form von Rillen können parallel zueinander und/oder schräg und/oder rechtwinklig zueinander gebildet werden, also beispielsweise in Form eines Gitters.

Prägen der vertieften Bereiche in Form von Rillen kann den Vorteil haben, technisch besonders einfach realisierbar zu sein, das heißt beispielsweise mit geringer Komplexität und/oder geringem Aufwand und/oder geringer Abnutzung eines Prägewerks.

Der vertiefte Bereich und/oder die vertieften Bereiche können in einem Querschnitt in einer Ebene, die rechtwinklig zu einer Ebene der Oberfläche der Unterseite des Kunstrasens ist, beispielsweise rechtwinklig zur Hauptebene, ein Sägezahnmuster und/oder ein Zickzackmuster haben. Der vertiefte Bereich und/oder die vertieften Bereiche könne eine Form von Pyramiden haben, beispielsweise von Pyramiden mit viereckiger Grundfläche. Beispielsweise kann die gesamte Oberfläche der Unterseite des Kunstrasens aus vertieften Bereichen ausgemacht sein, die die Form von Pyramiden haben.

Die Form des vertieften Bereichs 40 kann auf der Form des Prägewerks basieren.

Es können beispielsweise mindestens 1%, mindestens 5%, mindestens 10%, mindestens 20%, mindestens 25%, mindestens 30%, mindestens 40%, mindestens 50%, mindestens 60%, mindestens 70%, mindestens 80% oder mindestens 90% der Oberfläche der Unterseite des Kunstrasens gegenüber der Hauptebene der Unterseite und/oder gegenüber der noch nicht geprägten Unterseite vertieft sein.

Mehrere vertiefte Bereiche können einen vorbestimmten Abstand zueinander haben, beispielsweise können die mehreren vertieften Bereiche gleichmäßig verteilt sein. Beispielsweise kann der durchschnittliche Abstand zwischen zwei benachbarten vertieften Bereichen, die beispielsweise jeweils eine Rillenform haben, einer durchschnittlichen Breite der vertieften Bereiche in Richtung des kürzesten Abstands zwischen den benachbarten Bereichen entsprechen, oder einem Vielfachen davon, beispielweise höchstens dem 10-fachen, höchstens dem 5-fachen, höchstens dem 2-fachen, höchstens dem 1-fachen, mindestens dem 1-fachen, mindestens dem 0,75-fachen, mindestens dem 0,5-fachen. Beispielsweise können die vertieften Bereiche ein Raster bilden, also ein auf einer Fläche verteiltes regelmäßiges Muster. Beispielsweise können die vertieften Bereiche einen durchschnittlichen Abstand von höchstens 0,5 cm zueinander haben, höchstens 1 cm, höchstens 2 cm, oder höchstens 5 cm.

Wenn die vertieften Bereichen gleichmäßig beziehungsweise mit vorbestimmten Abstand zueinander geprägt werden, kann dies eine gleichmäßige Hitzebeständigkeit des Kunstrasens ermöglichen.

Der vertiefte Bereich kann beispielsweise auch die Form eines Gitters haben.

In einer bevorzugten Ausführungsform enthält der Kunstrasen an seiner Unterseite einen erhabenen Bereich, wobei der erhabene Bereich eine Höhe von einer Ebene nach unten hat, wobei die Ebene, beispielsweise eine Hauptebene der Unterseite des Kunstrasens, einen oder mehrere Oberflächenbereiche der Unterseite des Kunstrasens enthält, beispielsweise der ungeprägten Unterseite, wobei sich der erhabenen Bereiche entlang einer Richtung an der Unterseite des Kunstrasens in einer Länge erstreckt; wobei die Länge größer ist als der durchschnittliche Abstand, beispielsweise in Längsrichtung, zwischen zwei zueinander, beispielsweise in Längsrichtung, benachbarten Fasern beziehungsweise zwei benachbarten Faserbündeln; und wobei das Prägen die Höhe des erhabenen Bereichs von der Ebene abschnittsweise verringert und/oder den erhabenen Bereich abschnittsweise unterbricht.

Der Kunstrasen kann auch mehrere erhabene Bereiche an seiner Unterseite enthalten. Ausführungen zu einem erhabenen Bereich sind analog auf eine Mehrzahl von erhabenen Bereichen anwendbar, und umgekehrt.

Die Richtung "nach unten", ausgehend von einer Ebene, die einen oder mehrere Oberflächenbereiche der Unterseite des Kunstrasens enthält, kann "auswärts von der Unterseite des Kunstrasens" beziehungsweise "auswärts von der Unterseite des Kunstrasens und senkrecht zur Ebene" bedeuten.

Die Richtung "nach oben", ausgehend von einer Ebene, die einen oder mehrere Oberflächenbereiche einer Unterseite des Kunstrasens enthält, kann "von der Unterseite des Kunstrasens in Richtung einer Oberseite" beziehungsweise "von der Unterseite des Kunstrasens in Richtung einer Oberseite und senkrecht zur Ebene" bedeuten.

Der erhabene Bereich kann beispielsweise durch das Verschmelzen benachbarter Fasern beziehungsweise benachbarter Faserbündel miteinander gebildet werden. Der erhabene Bereich kann beispielsweise durch/beim Verschmelzen von verbundenen Bereichen der Fasern mit der Unterseite des Trägermaterials gebildet werden. Der erhabene Bereich kann Verschmelzungsbereiche benachbarter unterschiedlicher Fasern/Faserbündel enthalten.

Beispielsweise können sich ein oder mehrere erhabene Bereiche in Reihen oder in anderen Mustern oder in einem Raster entlang der Unterseite des Kunstrasens erstrecken, also beispielsweise von einem Rand der Unterseite des Kunstrasens zu einem gegenüberliegendem Rand. Der erhabene Bereich kann eine Länge haben, die mindestens 50%, mindestens 70%, oder mindestens 90% einer Seitenlänge einer Bahn des Kunstrasens ist. Erhabene Bereiche können vorstehende Bereiche sein, die von der Ebene der Unterseite des Kunstrasens um die Höhe hervorstehen.

Der erhabene Bereich kann eine Stegform haben, also beispielsweise eine Länge haben, die wesentlich größer ist als eine Breite, also beispielsweise die Form eines langgezogenen erhabenen Rechtecks. Ein erhabener Bereich in Stegform kann eine Länge haben, die den durchschnittlichen Abstand, beispielsweise in Längsrichtung, zweier zueinander, beispielsweise in Längsrichtung, benachbarter Faserbündel übersteigt, beispielsweise mindestens das Fünffache eines durchschnittlichen Abstands ist, mindestens das Zehnfache, mindestens das Fünfzigfache, mindestens das Hundertfache, oder mindestens das Tausendfache. Die Länge des erhabenen Bereichs kann mindestens das 2-fache, mindestens das 5-fache, mindestens das 10-fache, mindestens das 50-fache, mindestens das 100-fache, oder mindestens das 1000-fache einer Breite des erhabenen Bereichs sein. Beispielsweise kann sich der erhabene Bereich in der Form eines Stegs entlang der Unterseite des Kunstrasens erstrecken, also beispielsweise von einem Rand der Unterseite des Kunstrasens zu einem gegenüberliegendem Rand. Der erhabene Bereich kann eine Länge haben, die mindestens 50%, mindestens 70%, oder mindestens 90% einer Seitenlänge einer Bahn des Kunstrasens ist. Der erhabene Bereich kann sich in einer Längsrichtung und/oder in einer Querrichtung und/oder in einer Schrägrichtung erstrecken.

Eine Stegform kann eine invertierte Rillenform sein, dass Offenbarungen in Bezug auf eine Rillenform entsprechend auf eine Stegform anwendbar sind, und umgekehrt.

Erhabene Bereiche können sich positiv auf die Auszugsfestigkeit der Fasern beziehungsweise Faserbündel auswirken, beispielsweise wenn die erhabenen Bereiche Verschmelzungsbereiche benachbarter Fasern beziehungsweise benachbarter Faserbündel enthalten.

Verringern der Höhe kann bedeuten, dass die erhabenen Bereiche auch im Abschnitt der verringerten Höhe erhaben sind, also nach dem Prägen weiterhin erhaben sind. Dies ermöglicht, dass die erhabenen Bereiche mit verringerter Höhe sich weiterhin positiv auf die Auszugsfestigkeit der Fasern auswirken.

Gleichzeitig bildet das Prägen freie Zwischenräume, in die hinein sich das Material des Kunstrasens bei Erwärmung ausdehnen kann, und ermöglicht so eine verbesserte Hitzebeständigkeit.

Die verringerte Höhe kann beispielsweise im Bereich von 10%-90% der Höhe der erhabenen Bereiche sein, deren Höhe nicht verringert ist, bevorzugt im Bereich von 25%-75%, stärker bevorzugt im Bereich von 40%-60%. Die verringerte Höhe kann beispielsweise um 1 cm oder weniger gegenüber der nichtverringerten Höhe verringert sein, oder um 0,5 cm oder weniger, oder um 0,2 cm oder weniger, oder um 0,1 cm oder weniger. Die nicht-verringerte Höhe der erhabenen Bereiche kann beispielsweise 1 cm oder weniger sein, oder 0,5 cm oder weniger, oder 0,2 cm oder weniger, oder 0,1 cm oder weniger.

Dass die Höhe abschnittsweise verringert beziehungsweise unterbrochen ist, bedeutet, dass ein Abschnitt oder mehrere Abschnitte des erhabenen Bereichs in ihrer Höhe verringert sind, dass die Verringerung der Höhe also räumlich beschränkt ist. Der Begriff Abschnitte kann Bereiche bezeichnen.

Die Gesamtfläche von geprägten Abschnitten/vertieften Bereichen eines erhabenen Bereichs kann beispielsweise im Bereich von 10%-90% der Gesamtfläche des erhabenen Bereichs vor dem Prägen sein, bevorzugt im Bereich von 25%-75%, stärker bevorzugt im Bereich von 40%-60%. Die Breite und/oder Länge eines einzelnen geprägten Abschnitts/vertieften Bereichs der erhabenen Bereiche kann beispielsweise höchstens 5cm sein, höchstens 2 cm, höchstens 1 cm, oder höchstens 0,5 cm. Die Breite und/oder Länge eines einzelnen geprägten Abschnitts/vertieften Bereichs der erhabenen Bereiche kann beispielsweise mindestens 0,5 cm sein, mindestens 1 cm, mindestens 2 cm, oder mindestens 5 cm.

Dadurch, dass die Höhe abschnittsweise verringert wird, werden in dem/den Abschnitten beziehungsweise Bereichen mit verringerten Höhen ein oder mehrere Zwischenräume gebildet, in die hinein sich das Material des Kunstrasens bei Erwärmung ausdehnen kann.

In einer bevorzugten Ausführungsform unterbricht das Prägen die erhabenen Bereiche abschnittsweise, das heißt, die Bereiche sind im unterbrochenen/geprägten Abschnitt nicht mehr erhaben, das heißt, ihre Höhe ist um 100% verringert. Unterbrechen eines erhabenen Bereichs bedeutet, dass ein erhabener Bereich in mehrere erhabene Bereiche unterteilt wird. Dies kann besonders tiefe freie Zwischenräume bilden, in die hinein sich das Material des Kunstrasens bei Erwärmung ausdehnen kann, und kann somit eine besonders gute Hitzebeständigkeit des Kunstrasens ermöglichen.

In einer bevorzugten Ausführungsform ist eine Mehrzahl von vertieften Bereich in Rillenform schräg zu einer Mehrzahl von erhabenen Bereichen geprägt, die jeweils eine Stegform haben, wobei sich die vertieften Bereiche jeweils in einer ersten Richtung erstrecken, und die erhabenen Bereiche sich jemals in einer zweiten Richtung erstrecken, wobei die erste Richtung und die zweite Richtung schräg zueinander sind, vorzugsweise annährend rechtwinklig, das heißt in einem Winkel von 40%-50% zueinander, wobei der durchschnittliche Abstand der vertieften Bereiche zueinander im Bereich vom 0,5-fachen bis 1,5-fachen des durchschnittlichen Abstands der erhabenen Bereiche zueinander ist. Beispielsweise können dann die vertieften Bereiche eine Höhe der erhabenen Bereiche abschnittsweise verringern und/oder die erhabenen Bereiche abschnittsweise unterbrechen.

In einer bevorzugten Ausführungsform unterbricht eine Mehrzahl von vertieften Bereichen, die jeweils eine Rillenform haben, und vorzugsweise zueinander parallel sind, eine Mehrzahl von erhabenen Bereichen, die jeweils eine Stegform haben.

Abschnittsweises Verringern der Höhe des erhabenen Bereichs kann auch bedeuten, dass die Höhe im Abschnitt negativ wird, das heißt, dass aus einem erhabenen Bereich im Abschnitt ein vertiefter Bereich wird. Dies kann so verstanden werden, dass die Höhe um mehr als 100% verringert wird, also negativ wird. Dies kann besonders tiefe freie Zwischenräume bilden, in die hinein sich das Material des Kunstrasens bei Erwärmung ausdehnen kann, und kann somit eine besonders gute Hitzebeständigkeit des Kunstrasens ermöglichen.

Das Prägen kann einen vertieften Bereich in einem erhabenen Bereich der Unterseite des Kunstrasens bilden, und kann einen vertieften Bereich in einem Oberflächenbereich der Unterseite des Kunstrasens bilden, wobei der erhabene Bereich eine Höhe von dem Oberflächenbereich nach unten hat. Der Oberflächenbereich kann in der Hauptebene enthalten sein. Der Oberflächenbereich kann auch nicht erhaben sein.

Gemeinsames Prägen eines erhabenen und eines nicht erhabenen Bereichs kann gleichzeitig eine gute Hitzebeständigkeit und eine gute Auszugsfestigkeit ermöglichen.

In einer bevorzugten Ausführungsform ist eine maximale Höhe von Aufschiebungen des Trägermaterials des Kunstrasens an der Oberseite des Kunstrasens bei einer vorbestimmten Temperatur des Kunstrasens geringer als 2 cm, bevorzugt geringer als 1 cm, stärker bevorzugt geringer als 0,5 cm, noch stärker bevorzugt geringer als 0,1 cm, wobei die vorbestimmte Temperatur mindestens 35°C ist, oder mindestens 40°C, oder mindestens 50°C, oder mindestens 60°C, oder mindestens 70°C, oder mindestens 80°C, wobei die Höhe eine Höhe von einem ebenen Oberflächenbereich der Oberseite des Trägermaterials des Kunstrasens ist, und/oder von einem ebenen Oberflächenbereich der Oberseite des Kunstrasens, beispielsweise von einer Hauptebene der Oberseite des Trägermaterials des Kunstrasens, wobei Aufschiebungen Oberflächenbereiche der Oberseite des Trägermaterials des Kunstrasens umfassen, die gegenüber einem ebenen Oberflächenbereich der Oberseite des Trägermaterials erhaben sind.

Die Höhe kann eine Höhe senkrecht zu einer Ebene des Kunstrasens sein.

Kunstrasen, bei denen eine maximale Höhe von Aufschiebungen bei einer der angegebenen Temperaturen in einem der angegebenen Höhenbereiche ist, können eine gute Hitzebeständigkeit haben, das heißt Dimensionsstabilität bei hohen Temperaturen, und eine gute Stabilität charakteristischer Eigenschaften auch bei hohen Temperaturen.

In einer bevorzugten Ausführungsform enthält die Kalanderwalze ein Prägewerk und die Unterseite des Kunstrasens wird mittels des Prägewerks der Kalanderwalze geprägt.

Dies bietet den Vorteil, dass das Prägen mit geringem Aufwand realisiert werden kann, indem die Funktion des Übertragens von Wärme und des Prägens beide von der Kalanderwalze ausgeführt werden können. Beispielsweise ist ein erneutes Aufheizen des Kunstrasens zum Prägen nicht erforderlich, was ein energieeffizientes Verfahren ermöglicht. Die Kalanderwalze ist beheizt, wodurch das Prägen effizient durchgeführt werden kann.

In einer bevorzugten Ausführungsform wird der Kunstrasen mittels einer Kühlrolle abgekühlt, wobei der Kunstrasen der Kühlrolle zugeführt wird, wobei die Kühlrolle ein Prägewerk enthält und die Unterseite des Kunstrasens mittels des Prägewerks der Kühlrolle geprägt wird.

Auch diese Ausführungsform bietet den Vorteil, dass das Prägen mit geringem Aufwand realisiert werden kann, indem die Funktion des Abkühlens und des Prägens beide von der Kühlrolle ausgeführt werden können.

In einer bevorzugten Ausführungsform kann das Verfahren ferner umfassen: Zuführen des Kunstrasens zu einer Prägewalze, die ein Prägewerk umfasst, wobei die Unterseite des Kunstrasens mittels des Prägewerks der Prägewalze geprägt wird, wobei vor dem Prägen Wärme an den Kunstrasen übertragen wird und/oder wobei die Unterseite des Kunstrasens vor dem Abführen und Abkühlen des Kunstrasens geprägt wird.

Prägen mittels einer separaten Prägewalze ermöglicht eine höhere Flexibilität bei der Einstellung von Prägeparameter, sodass Eigenschaften der vertieften Bereiche und somit des Kunstrasens freier gewählt werden können.

Vorzugsweise ist bei dem Schritt des Führens zumindest eine rotierende Anpresswalze um einen Kalanderspalt beabstandet und im Wesentlichen achsenparallel zu der Kalanderwalze angeordnet, wobei die Anpresswalze das Trägermaterial mit den Fasern gegen die beheizte rotierende Kalanderwalze mit einer vorbestimmten Anpresskraft presst.

Die um die Kalanderwalze angeordnete zumindest eine Anpresswalze führt das Trägermaterial mit den Fasern in einer vorbestimmten Position um zumindest einen Teilbereich der Oberfläche der beheizten rotierenden Kalanderwalze, wodurch die Prozessgenauigkeit erhöht werden kann und ein Verrutschen des Trägermaterials mit den Fasern verhindert wird. Hierdurch kann ein besonders gutes, das heißt gleichmäßiges Verschmelzen der Rückseite des Trägermaterials mit den verbundenen Bereichen der Fasern erreicht werden. Ferner kann durch das Einstellen des Kalanderspalts die Anpresskraft auf das Trägermaterial mit den Fasern angepasst werden, wodurch die Prozessgenauigkeit weiter verbessert werden kann und die Verbindung zwischen dem Trägermaterial und den Fasern gestärkt wird. Außerdem beschleunigt der Anpressdruck der Anpresswalzen das Verschmelzen zwischen den Fasern und dem Trägermaterial, wodurch mit geringeren Verweilzeiten auf der Kalanderwalze ähnliche Festigkeitswerte erreicht werden können und somit die Prozesszeit reduziert werden kann.

In einer bevorzugten Ausführungsform umfasst das erfindungsgemäße Verfahren ferner einen Schritt des Bereitstellens einer Folie, wobei bei dem Schritt des Zuführens des Trägermaterials die Folie zwischen der Unterseite des Trägermaterials mit den verbundenen Bereichen der Fasern und der beheizten rotierenden Kalanderwalze zugeführt wird, und wobei bei dem Schritt des Übertragens von Wärme die Folie mit der Unterseite des Trägermaterials und mit den verbundenen Bereichen der Fasern verschmolzen wird.

Lokal wird die Folie sowohl mit der Unterseite des Trägermaterials als auch mit den verbundenen Bereichen der Fasern verschmolzen. Dadurch wird die Verbindung zwischen Trägermaterial und Fasern verstärkt und somit auch die Auszugfestigkeit der Fasern erhöht. Global, das heißt über den gesamten Kunstrasen hinweg betrachtet, verleiht die Folie dem Kunstrasen eine zusätzliche Stabilität. Unter "Stabilität" wird insbesondere die Zugfestigkeit und Dehnung (ermittelt in einem Zugversuch), die thermische Stabilität (ermittelt in einem Schrumpfversuch) sowie die Stabilität bei der Verlegung von Kunstrasenbahnen, insbesondere gegen Verzug und Falten des Kunstrasens bei einem breiten Außentemperaturbereich, verstanden.

In einer weiteren bevorzugten Ausführungsform umfasst das erfindungsgemäße Verfahren einen Schritt des Bereitstellens einer Folie wobei, nach dem Schritt des Abführens und Abkühlens des Kunstrasens, die Folie zwischen einer Unterseite des Kunstrasens und einer weiteren beheizten rotierenden Kalanderwalze zugeführt wird, einen Schritt des Übertragens von Wärme von der weiteren beheizten rotierenden Kalanderwalze zu der Unterseite des Kunstrasens und der Folie, einen Schritt des Verschmelzens der Unterseite des Kunstrasens mit der Folie zu einem beschichteten Kunstrasen sowie die Schritte des Abführens und Abkühlens des beschichteten Kunstrasens.

Die Folie wird hierbei nicht schon während des Schritts des Übertragens von Wärme mit der Unterseite des Trägermaterials und mit den verbundenen Bereichen der Fasern verschmolzen. Stattdessen wird der Kunstrasen von der beheizten rotierenden Kalanderwalze zu einer weiteren beheizten rotierenden Kalanderwalze geführt, wobei die Folie mit der Unterseite des Kunstrasens verschmolzen wird. Dadurch wird die Verbindung zwischen Trägermaterial und Fasern weiter verstärkt und somit auch die Auszugfestigkeit der Fasern erhöht. Über den gesamten Kunstrasen hinweg betrachtet, verleiht die Folie dem Kunstrasen eine zusätzliche Stabilität. Des Weiteren wird durch die Verwendung einer weiteren beheizten rotierenden Kalanderwalze die Prozessführung und die Einstellung der Prozessparameter (z.B. Temperatur der Kalanderwalzen, Anpressdruck, Verweilzeit, etc.) für die Herstellung des Kunstrasens vereinfacht, da die Prozessparameter für die weitere beheizte rotierende Kalanderwalze gesondert und speziell für das Aufschmelzen der Folie gewählt werden können.

In einer bevorzugten Ausführungsform umfasst das Material der Folie mindestens eines der folgenden Materialien: Ethylen-Vinylacetat , ein thermoplastische Elastomer, und ein thermoplastisches Olefin. Der Massenanteil von Ethylen-Vinylacetat , thermoplastischen Elastomeren und thermoplastischen Olefinen in Summe mindestens 50 % der Masse der Folie ausmacht, bevorzugt mindestens 60 %, 70 % oder 80 %, stärker bevorzugt mindestens 90%, oder mindestens 95%.

Ethylen-Vinylacetat, thermoplastische Elastomere, und thermoplastische Olefine haben eine hohe Elastizität. Wenn sich Bereiche des Kunstrasens, beispielsweise das Trägermaterial und/oder verbundene Bereiche der Fasern ausdehnen, beispielsweise aufgrund einer Erwärmung, kann das Material der Folie komprimiert werden, sodass Aufschiebungen der Unterseite des Kunstrasens vermieden und/oder verringert werden. Somit kann eine Hitzebeständigkeit des Kunstrasens verbessert werden.

Beispielsweise kann die Folie beziehungsweise das Material der Folie in Bereichen zwischen verbundenen Bereichen der Fasern an der Unterseite des Trägermaterials bereitgestellt werden.

Die Folie kann eine Dicke von 1 mm oder weniger haben, 0,5 mm oder weniger, 0,2 mm oder weniger, oder 0,1 mm oder weniger. Eine dünne Folie kann in Hinblick auf effiziente Ressourceneinsatz bevorzugt sein. Eine dickere Folie kann eine bessere mechanische Stabilität ermöglichen.

Das Prägen einer Unterseite des Kunstrasens kann vor dem Verschmelzen der Folie mit der Unterseite des Trägermaterials und mit den verbundenen Bereichen der Fasern durchgeführt werden, es kann also der Kunstrasen geprägt werden, bevor eine Folie mit dem Kunstrasen verschmolzen worden ist.

Dies bietet den Vorteil, dass die Folie beziehungsweise Material der Folie auch in einem vertieften Bereich bereitgestellt werden kann.

Das Prägen einer Unterseite des Kunstrasens kann nach dem Verschmelzen der Folie mit der Unterseite des Trägermaterials und mit den verbundenen Bereichen der Fasern durchgeführt werden, es kann also der Kunstrasen geprägt werden, nachdem eine Folie mit dem Kunstrasen verschmolzen worden ist.

Das Prägen einer Unterseite des Kunstrasens kann bei dem Verschmelzen/während des Verschmelzens der Folie mit der Unterseite des Trägermaterials und mit den verbundenen Bereichen der Fasern durchgeführt werden, es kann also der Kunstrasen geprägt werden, während eine Folie mit dem Kunstrasen verschmolzen wird.

Vorzugsweise umfasst der Schritt des Bereitstellens einer Folie das Streuen eines Kunststoffgranulats auf ein Transportband, das Fördern des Kunststoffgranulats mittels des Transportbands zu einem Wärmeeinbringungsbereich, das Einbringen von Wärme und Schmelzen des Kunststoffgranulats, das Fördern des geschmolzenen Kunststoffgranulats zu einem Druckeinbringungsbereich, das Einbringen von Druck und Verdichten des geschmolzenen Kunststoffgranulats zu einer Folie mit einer vorbestimmten Dicke, und das Abführen und Abkühlen der Folie.

Das Ausgangsmaterial ist hierbei ein Kunststoffgranulat, was eine bessere Handhabung beispielsweise beim Transport und der Lagerung ermöglicht, als eine vorgefertigte Folie. Da die Herstellung der Folie in dem erfindungsgemäßen Verfahren integriert ist, können die Eigenschaften der Folie (beispielsweise die Festigkeit, Folienstärke, etc.) flexibel an die an den Kunstrasen gestellten Anforderungen angepasst werden durch eine geeignete Wahl von beispielsweise der Menge des Kunststoffgranulats, der chemischen Zusammensetzung des Kunststoffgranulats, sowie durch das Maß und die Dauer der Wärmeeinbringung und der Druckeinbringung. Außerdem ermöglicht die Integration der Folienherstellung in das Verfahren zur Herstellung eines Kunstrasens, dass der Herstellungsprozess nicht unterbrochen werden muss, um beispielsweise eine Folie auszuwechseln, da lediglich Kunststoffgranulat nachgefüllt wird und die Folie somit kontinuierlich hergestellt werden kann.

Gemäß einem weiteren Aspekt umfasst das erfindungsgemäße Verfahren das Bereitstellen eines Kunststoffgranulats, wobei bei dem Schritt des Zuführens des Trägermaterials das Kunststoffgranulat zwischen der Unterseite des Trägermaterials mit den verbundenen Bereichen der Fasern und der beheizten rotierenden Kalanderwalze zugeführt wird, und wobei bei dem Schritt des Übertragens von Wärme das Kunststoffgranulat mit der Unterseite des Trägermaterials und mit den verbundenen Bereichen der Fasern verschmolzen wird.

Das Ausgangsmaterial ist hierbei ein Kunststoffgranulat, was eine bessere Handhabung beispielsweise beim Transport und der Lagerung ermöglicht, als eine vorgefertigte Folie. Insbesondere kann das Kunststoffgranulat einfach zugeführt werden, indem es auf die Unterseite des Trägermaterials mit den verbundenen Fasern aufgestreut wird. Lokal wird das Kunststoffgranulat sowohl mit der Unterseite des Trägermaterials als auch mit den verbundenen Bereichen der Fasern durch die Kalanderwalze verschmolzen. Dadurch wird die Verbindung zwischen Trägermaterial und Fasern verstärkt und somit auch die Auszugfestigkeit der Fasern erhöht. Global, das heißt über den gesamten Kunstrasen hinweg betrachtet, verleiht das aufgeschmolzene Kunststoffgranulat dem Kunstrasen eine zusätzliche Stabilität. Das Zuführen einer Folie, was zusätzliche Prozessschritte sowie deren Einstellung und Überwachung erfordert, ist hierbei nicht erforderlich. Somit werden Probleme, die beim Zuführen von einer Folie entstehen können (Prozessgenauigkeit, Abriss der Folie, etc.) vermieden und das Verfahren wird insgesamt vereinfacht. Zudem können die Eigenschaften des Kunstrasens (Festigkeit, Kunstrasenhöhe, etc.) durch die Menge des Kunststoffgranulats, die chemische Zusammensetzung des Kunststoffgranulats, das Maß und die Dauer der Wärmeeinbringung und der Druckeinbringung von der Kalanderwalze bzw. den Anpresswalzen flexibel angepasst werden.

Gemäß einem weiteren Aspekt umfasst das erfindungsgemäße Verfahren ferner das Bereitstellen eines Kunststoffgranulats, wobei, nach dem Schritt des Abführens und Abkühlens des Kunstrasens, das Kunststoffgranulat zwischen einer Unterseite des Kunstrasens und einer weiteren beheizten rotierenden Kalanderwalze zugeführt wird, das Übertragen von Wärme von der weiteren beheizten rotierenden Kalanderwalze zu der Unterseite des Kunstrasens und dem Kunststoffgranulat, das Verschmelzen der Unterseite des Kunstrasens mit dem Kunststoffgranulat zu einem beschichteten Kunstrasen, sowie das Abführen und Abkühlen des beschichteten Kunstrasens.

Das Ausgangsmaterial ist hierbei ein Kunststoffgranulat, was eine bessere Handhabung beispielsweise beim Transport und der Lagerung ermöglicht als eine vorgefertigte Folie. Insbesondere kann das Kunststoffgranulat einfach zugeführt werden, indem es auf die Unterseite des Trägermaterials mit den verbundenen Fasern aufgestreut wird. Das Kunststoffgranulat wird hierbei nicht schon während des Schritts des Übertragens von Wärme mit der Unterseite des Trägermaterials und mit den verbundenen Bereichen der Fasern verschmolzen. Stattdessen wird der Kunstrasen von der beheizten rotierenden Kalanderwalze zu einer weiteren beheizten rotierenden Kalanderwalze geführt, wobei das Kunststoffgranulat mit der Unterseite des Kunstrasens verschmolzen wird und eine Beschichtung bildet. Dadurch wird die Verbindung zwischen Trägermaterial und Fasern weiter verstärkt und somit auch die Auszugfestigkeit der Fasern erhöht. Über den gesamten Kunstrasen hinweg betrachtet, verleiht die durch das Aufschmelzen entstehende Beschichtung dem Kunstrasen eine zusätzliche Stabilität. Des Weiteren wird durch die Verwendung einer weiteren beheizten rotierenden Kalanderwalze die Prozessführung und die Einstellung der Prozessparameter (z.B. Temperatur der Kalanderwalzen, Anpressdruck, Verweilzeit, etc.) für die Herstellung des Kunstrasens vereinfacht, da die Prozessparameter für die weitere beheizte rotierende Kalanderwalze gesondert und speziell für das Aufschmelzen des Kunststoffgranulats gewählt werden können. Das Zuführen einer Folie, was zusätzliche Prozessschritte, deren Einstellung und Überwachung erfordert, ist hierbei nicht erforderlich. Somit werden Probleme, die beim Zuführen von einer Folie entstehen können (Prozessgenauigkeit, Abriss der Folie, etc.) vermieden und das Verfahren wird insgesamt vereinfacht. Zudem können die Eigenschaften der Beschichtung (Festigkeit, Beschichtungsdicke, etc.) durch die Menge des Kunststoffgranulats, die chemische Zusammensetzung des Kunststoffgranulats, das Maß und die Dauer der Wärmeeinbringung und der Druckeinbringung von der Kalanderwalze bzw. den Anpresswalzen flexibel an die Anforderungen an den beschichteten Kunstrasen angepasst werden.

Gemäß einem Aspekt der vorliegenden Erfindung ist bei dem Schritt des Führens zumindest eine rotierende Anpresswalze um einen Kalanderspalt beabstandet und im Wesentlichen achsenparallel zu der Kalanderwalze und/oder der weiteren Kalanderwalze angeordnet, wobei die Anpresswalze das Trägermaterial mit den Fasern und der Folie oder dem Kunststoffgranulat gegen die beheizte rotierende Kalanderwalze und/oder die weitere beheizte Kalanderwalze mit einer vorbestimmten Anpresskraft presst.

Die um die Kalanderwalze und/oder um die weitere Kalanderwalze angeordnete zumindest eine Anpresswalze führt das Trägermaterial mit den Fasern und die Folie oder das Kunststoffgranulat, bzw. den Kunstrasen und die Folie oder das Kunststoffgranulat, in einer vorbestimmten Position um zumindest einen Teilbereich der Oberfläche der beheizten rotierenden Kalanderwalze und/oder um zumindest einen Teilbereich der Oberfläche der weiteren beheizten rotierenden Kalanderwalze, wodurch die Prozessgenauigkeit erhöht werden kann und ein Verrutschen des Trägermaterials mit den Fasern und der Folie oder dem Kunststoffgranulat, bzw. des Kunstrasens und der Folie oder dem Kunststoffgranulat, verhindert wird. Ferner kann durch das Einstellen des Kalanderspalts die Anpresskraft auf das Trägermaterial mit den Fasern und der Folie oder dem Kunststoffgranulat, bzw. auf den Kunstrasen und die Folie oder das Kunststoffgranulat angepasst werden, wodurch die Prozessgenauigkeit ferner verbessert werden kann und die Verbindung zwischen dem Trägermaterial, den Fasern und der Folie oder der Beschichtung weiter gestärkt wird.

Gemäß der vorliegenden Erfindung ist ferner bevorzugt, dass das Trägermaterial und die Folie oder das Kunststoffgranulat aus im Wesentlichen derselben Materialart gebildet sind.

Die Verwendung von lediglich einer Materialart für das Trägermaterial und die Folie oder das Kunststoffgranulat verbessert die Recycelbarkeit des Kunstrasens, da keine andersartigen Materialien, wie zum Beispiel Latex, Polyurethan, etc. davon getrennt werden müssen. Darüber hinaus wird dadurch die Prozessführung und die Einstellung der Prozessparameter für die Herstellung des Kunstrasens vereinfacht, da aufgrund der Verwendung gleichartiger Materialien für Trägermaterial und die Folie oder das Kunststoffgranulat auch zum Beispiel ihre Schmelzpunkte ähnlich sind.

Vorzugsweise sind das Trägermaterial und die Fasern aus im Wesentlichen derselben Materialart gebildet.

Die Verwendung von lediglich einer Materialart für das Trägermaterial und die Fasern verbessert die Recycelbarkeit des Kunstrasens, da keine andersartigen Materialien, wie zum Beispiel Latex, Polyurethan, etc. davon getrennt werden müssen. Darüber hinaus wird dadurch die Prozessführung und die Einstellung der Prozessparameter für die Herstellung des Kunstrasens vereinfacht, da aufgrund der Verwendung gleichartiger Materialien für Trägermaterial und die Fasern auch zum Beispiel ihre Schmelzpunkte ähnlich sind.

In einer weiteren bevorzugten Ausführungsform gemäß der vorliegenden Erfindung umfasst das Trägermaterial recyceltes und recycelbares Material und/oder umfassen die Fasern recyceltes und recycelbares Material.

Die Verwendung von recyceltem bzw. recycelbarem Material für das Trägermaterial und/oder die Fasern verbessert die Umweltbilanz des Kunstrasens (insbesondere kann dadurch ein hohes Maß an Materialverbrauch, Energie und CO2-Ausstoß eingespart werden). Darüber hinaus können durch die Verwendung von recyceltem Material für das Trägermaterial und/oder die Fasern die Herstellungskosten für den Kunstrasen verringert werden, da anstelle von Neumaterial auch recyceltes Material aus z.B. altem Kunstrasen wiederverwendet werden kann. Ferner ermöglicht erst die Verwendung von recycelbarem Material das Recyceln des Kunstrasens nach dem Ende der Lebensdauer und somit das erneute Zuführen in den Materialkreislauf.

Die Folie oder das Kunststoffgranulat können gemäß der vorliegenden Erfindung recyceltes und/oder recycelbares Material umfassen.

Die Verwendung von recyceltem bzw. recycelbarem Material für die Folie oder das Kunststoffgranulat verbessert ferner die Umweltbilanz des Kunstrasens (insbesondere kann dadurch ein hohes Maß an Materialverbrauch, Energie und CO2-Ausstoß eingespart werden). Darüber hinaus können durch die Verwendung von recyceltem Material für die Folie oder das Kunststoffgranulat die Herstellungskosten für den Kunstrasen verringert werden, da anstelle von Neumaterial auch recyceltes Material (zum Beispiel alten Kunstrasen, auch genannt "end-of-life turf") als Sekundärrohstoff bzw. Sekundärwerkstoff wiederverwendet werden kann. Ferner ermöglicht die Verwendung von recycelbarem Material das Recyceln des Kunstrasens nach dem Ende der Lebensdauer und somit das erneute Zuführen in den Materialkreislauf.

Vorzugsweise umfasst die Folie gemäß der vorliegenden Erfindung eine erste Schicht, eine zweite Schicht und eine dritte Schicht, wobei das Trägermaterial und die erste Schicht und die dritte Schicht aus im Wesentlichen derselben Materialart gebildet sind, wobei die zweite Schicht recycelten Kunstrasenabfall umfasst.

Mehrschichtige Folien, wobei die Schichten verschiede Materialarten umfassen, können beispielsweise mit dem Verfahren der Mehrschicht-Extrusion (Co-Extrusion) hergestellt werden. Die Verwendung von im Wesentlichen derselben Materialart für das Trägermaterial und die erste und dritte Schicht der Folie verbessert die Recycelbarkeit des Kunstrasens, da keine andersartigen Materialien, wie zum Beispiel Latex, Polyurethan, etc. enthalten sind. Soll dennoch Material in dem Kunstrasen verarbeitet werden, das mit anderen Materialien (z.B. Sand, Latex, Polyurethan oder Infill-Resten) kontaminiert ist, so kann die zweite Schicht der Folie ein solches Abfallmaterial umfassen. Dies ist insbesondere vorteilhaft, wenn recyceltes Material aus alten Kunstrasen wiederverwendet werden soll, aber z.B. mit Latex kontaminiert ist. Das verschmutzte Abfallmaterial kann somit zwischen zwei im Wesentlichen reinen Schichten eingebunden und stabilisiert werden. So kommt es bei dem Blasfolien-Prozess zum Beispiel nicht zu einem unerwünschten Platzen der Schlauchblase durch Schmutzpartikel.

In einer bevorzugten Ausführungsform umfasst das Material der ersten Schicht mindestens eines folgenden Materialien: Ethylen-Vinylacetat, ein thermoplastische Elastomer, und ein thermoplastisches Olefin, wobei der Massenanteil von Ethylen-Vinylacetat, thermoplastischen Elastomeren und thermoplastischen Olefinen in Summe mindestens 50 % der Masse der ersten Schicht ausmacht, bevorzugt mindestens 60 %, 70 % oder 80 %, stärker bevorzugt mindestens 90% oder mindestens 95%.

Beispielsweise kann die erste Schicht beziehungsweise das Material der ersten Schicht in Bereichen zwischen verbundenen Bereichen der Fasern an der Unterseite des Trägermaterials bereitgestellt werden.

Beispielsweise kann die zweite und/oder die dritte Schicht beziehungsweise das Material dieser Schicht/Schichten in Bereichen zwischen verbundenen Bereichen der Fasern an der Unterseite des Trägermaterials bereitgestellt werden.

Die erste Schicht kann eine Dicke von 1 mm oder weniger haben, 0,5 mm oder weniger, 0,2 mm oder weniger, oder 0,1 mm oder weniger. Eine dünne erste Schicht kann in Hinblick auf effiziente Ressourceneinsatz bevorzugt sein. Eine dickere erste Schicht kann eine bessere mechanische Stabilität ermöglichen.

In einer bevorzugten Ausführungsform umfasst das Material der zweiten Schicht und/oder der dritten Schicht mindestens eines folgenden Materialien: Ethylen-Vinylacetat, ein thermoplastische Elastomer, und ein thermoplastisches Olefin, wobei der Massenanteil von Ethylen-Vinylacetat, thermoplastischen Elastomeren und thermoplastischen Olefinen in Summe mindestens 50 % der Masse der ersten Schicht ausmacht, bevorzugt mindestens 60 %, 70 % oder 80 %, stärker bevorzugt mindestens 90% oder mindestens 95%.

In einer bevorzugten Ausführungsform umfasst das Verfahren zur Herstellung eines Kunstrasens die Herstellung einer ersten und einer zweiten Kunstrasenbahn gemäß einem Verfahren der vorliegenden Offenbarung, Bereitstellen einer Vlies-Bahn, Auftragen eines flüssigen Klebers auf die Vlies-Bahn, Verbinden der ersten und zweiten Kunstrasenbahn mit dem Vlies derart, dass die erste und zweite Kunstrasenbahn auf dem Vlies aufliegen und zueinander bündig sind.

Insbesondere bei Kunstrasen, der EOL turf enthält, kann ein Verkleben einzelner Bahnen miteinander schwierig sein, da konventioneller Kleber, beispielsweise Polyurethankleber (PU-Kleber), keine guten Hafteigenschaften an solch einem Kunstrasen aufweist. Das Vlies kann beispielsweise eine Funktion als Haftvermittler haben, beispielsweise für den Kleber an den jeweiligen Kunstrasenbahnen.

Ein Verfahren, das die Schritte Bereitstellen einer Vlies-Bahn, Auftragen eines flüssigen Klebers auf die Vlies-Bahn, Verbinden einer ersten und einer zweiten Kunstrasenbahn mit dem Vlies derart, dass die erste und zweite Kunstrasenbahn auf dem Vlies aufliegen und zueinander bündig sind, umfasst, ist nicht auf einen Kunstrasen und ein Verfahren gemäß der vorliegenden Offenbarung beschränkt, sondern kann für alle Arten von Kunstrasen und/oder Teppichen und Verfahren zu deren Herstellung verwendet werden.

Der Kleber kann beispielsweise ein PU-Kleber sein. Das Vlies kann beispielsweise Polyethylenterephthalat (PET), Polypropylen (PP) enthalten. Das Vlies kann ein Bico-Vlies sein, das beispielsweise PET und Polyethylen (PE) enthält, oder ein Bico-Vlies sein, das beispielsweise PET und PP enthält. Das Vlies kann eine Seitenlänge haben, die einer Seitenlänge der ersten und zweiten Kunstrasenbahn entspricht, und eine Breite von 40 cm oder mehr, oder 30 cm oder mehr. Beispielsweise können die erste und zweite Kunstrasenbahn derart auf der Vliesbahn aufliegen, dass sie in einem mittleren Bereich der Vliesbahn zueinander bündig sind. Ein Randbereich eines Seitenrands der ersten und/oder der zweiten Kunstrasenbahn kann in Gänze auf dem Vlies aufliegen, das Vlies kann also gewissermaßen wie ein Nahtband fungieren.

Das Vlies kann beispielsweise ein Flächengewicht in einem Bereich von 20-120 g/cm^2 haben, vorzugsweise in einem Bereich von 30-70 g/cm^2.

In einer bevorzugten Ausführungsform umfasst das erfindungsgemäße Verfahren einen Schritt des Bereitstellens einer Folie und einen Schritt des Bereitstellens des Vlies, wobei bei dem Schritt des Zuführens des Trägermaterials die Folie und das Vlies zwischen der Unterseite des Trägermaterials mit den verbundenen Bereichen der Fasern und der beheizten rotierenden Kalanderwalze zugeführt wird, und wobei bei dem Schritt des Übertragens von Wärme die Folie und das Vlies mit der Unterseite des Trägermaterials und mit den verbundenen Bereichen der Fasern verschmolzen wird.

Im Schritt des Übertragens von Wärme kann das Material der geheizten Folie in das Vlies diffundieren. Mittels des Vlies kann eine formschlüssige Verbindung hergestellt werden.

Die Folie und das Vlies können beispielsweise als zwei separate Bahnen zugeführt werden. Das Vlies kann beispielsweise nach dem Zuführen der Folie zugeführt werden.

Die Folie kann beispielsweise auch bereits vor dem Schritt des Zuführens des Trägermaterials mit dem Vlies beschichtet sein und/oder das Vlies kann bereits auf der Folie aufkaschiert sein, und die Folie und das Vlies können als Folien-/Vliesverbund zugeführt werden.

Gemäß einem Aspekt der vorliegenden Erfindung kann die Folie eine erste Schicht, eine zweite Schicht und eine dritte Schicht umfassen, wobei die erste Schicht ein Material mit modifizierten Adhäsionseigenschaften umfasst, wobei das Trägermaterial und die dritte Schicht aus im Wesentlichen demselben Material gebildet sind, und wobei die zweite Schicht recycelten Kunstrasenabfall umfasst. Das Material mit modifizierten Adhäsionseigenschaften kann einen Haftvermittler enthalten und/oder ein Haftvermittler sein.

Gemäß einem Aspekt der vorliegenden Erfindung kann die Folie eine erste Schicht, eine zweite Schicht und eine dritte Schicht umfassen, wobei die erste Schicht einen Haftvermittler umfasst, wobei das Trägermaterial und die dritte Schicht aus im Wesentlichen demselben Material gebildet sind, und wobei die zweite Schicht recycelten Kunstrasenabfall umfasst

Die Verwendung eines Materials mit modifizierten Adhäsionseigenschaften in der ersten Schicht, die der Unterseite des Trägermaterials zugewandt ist, erhöht die Adhäsionskraft zwischen der ersten Schicht und dem Trägermaterial sowie zwischen der ersten Schicht und den verbundenen Bereichen der Fasern und verbessert zudem die Auszugfestigkeit der Fasern. Dadurch, dass dieselbe Materialart für das Trägermaterial und die dritte Schicht der Folie verwendet wird, kann die Recycelbarkeit des Kunstrasens verbessert werden, da keine andersartigen Materialien, wie zum Beispiel Latex, Polyurethan, etc. darin enthalten sind. Somit kann auch die Umweltbilanz des Kunstrasens verbessert werden (insbesondere kann dadurch ein hohes Maß an Materialverbrauch, Energie und CO2-Ausstoß eingespart werden). Soll dennoch Material in dem Kunstrasen verarbeitet werden, das mit anderen Materialien (z.B. Sand, Latex, Polyurethan oder Infill-Resten) kontaminiert ist, so kann die zweite Schicht der Folie ein solches Abfallmaterial umfassen. Dies ist insbesondere vorteilhaft, wenn recyceltes Material aus alten Kunstrasen wiederverwendet werden soll, aber z.B. mit Latex kontaminiert ist. Das verschmutzte Abfallmaterial kann somit zwischen zwei im Wesentlichen reinen Schichten eingebunden und stabilisiert werden. So kommt es bei dem Blasfolien-Prozess zum Beispiel nicht zu einem unerwünschten Platzen der Schlauchblase durch Schmutzpartikel.

Gemäß einem weiteren Aspekt umfasst das Verfahren zur Herstellung eines Kunstrasens gemäß der vorliegenden Erfindung ferner ein Perforieren des Kunstrasens und/oder des beschichteten Kunstrasens.

Das Durchführen einer Perforierung führt zu den erforderlichen Eigenschaften der Wasserdurchlässigkeit des Kunstrasens im Betrieb.

Ferner wird ein Kunstrasen gemäß der vorliegenden Erfindung vorgeschlagen, umfassend: ein Trägermaterial mit einer Oberseite und einer Unterseite, eine Mehrzahl von Fasern, wobei jede Faser zwei Enden umfasst, welche sich von der Oberseite des Trägermaterials erstrecken, und einen verbundenen Bereich umfasst, welcher an der Unterseite des Trägermaterials schlaufenartig angeordnet ist, wobei das Trägermaterial an der Unterseite mit den verbundenen Bereichen der Fasern verschmolzen ist, und wobei eine Unterseite des Kunstrasens eine Prägung enthält, in der ein vertiefter Bereich gebildet ist.

Der Kunstrasen kann eine hohe Qualität und gute Hitzebeständigkeit aufweisen.

Bei dem erfindungsgemäßen Kunstrasen wird der Zusammenhalt zwischen den Fasern und dem Trägermaterial dadurch erzeugt, dass die Fasern direkt mit dem Trägermaterial an den verbundenen Bereichen verschmolzen sind. Somit wird insbesondere ein einfacher Aufbau des Kunstrasens gewährleistet und es wird keine zusätzliche Folie benötigt, um die Fasern mit dem Trägermaterial zu verbinden und der Kunstrasen kann mit einem geringen Materialverbrauch hergestellt werden. Der erfindungsgemäße Kunstrasen ist insbesondere durch einen einfachen Aufbau bei einer vergleichbaren Auszugfestigkeit charakterisiert. Ferner kann dadurch die Recycelbarkeit des Kunstrasens erhöht werden, da der Kunstrasen weniger einzelne Komponenten aus unterschiedlichen Materialarten enthält.

Vorzugsweise umfasst der Kunstrasen ferner eine Folie, wobei die Folie mit der Unterseite des Trägermaterials und mit den verbundenen Bereichen der Fasern verschmolzen ist.

Lokal ist die Folie sowohl mit der Unterseite des Trägermaterials als auch mit den verbundenen Bereichen der Fasern verschmolzen und verstärkt somit die Verbindung zwischen Trägermaterial und Fasern und damit die Auszugfestigkeit der Fasern. Global, das heißt über den gesamten Kunstrasen hinweg betrachtet, verleiht die Folie dem Kunstrasen eine zusätzliche Stabilität.

In einer bevorzugten Ausführungsform umfasst die Folie eine erste Schicht, eine zweite Schicht und eine dritte Schicht, wobei das Trägermaterial und die erste Schicht und die dritte Schicht aus im Wesentlichen demselben Material gebildet sind, wobei die zweite Schicht recycelten Kunstrasenabfall umfasst.

Die Verwendung von im Wesentlichen derselben Materialart für das Trägermaterial und die erste und dritte Schicht der Folie verbessert die Recycelbarkeit des Kunstrasens, da dadurch ein Großteil des Kunstrasens aus derselben Materialart besteht und wenige bzw. keine andersartigen Materialien, wie zum Beispiel Latex, Polyurethan, etc. enthalten sind. Soll dennoch Material in dem Kunstrasen verarbeitet werden, das mit anderen Materialien (z.B. Sand, Latex, Polyurethan oder Infill-Resten) kontaminiert ist, so kann die zweite Schicht der Folie ein solches Abfallmaterial umfassen. Das verschmutzte Abfallmaterial kann somit zwischen zwei im Wesentlichen reinen Schichten, das heißt nicht kontaminierten Schichten, eingebunden und stabilisiert werden. So kommt es bei dem Blasfolien-Prozess zum Beispiel nicht zu einem unerwünschten Platzen der Schlauchblase durch Schmutzpartikel. Somit können auch kontaminierte Materialen von z.B. alten Kunstrasen (Kunstrasenabfälle) in dem erfindungsgemäßen Kunstrasen verwendet werden, was neben den vorstehend beschriebenen Vorteilen auch die Umweltbilanz des Kunstrasens ferner verbessert, da Material von älteren Kunstrasen effizient wiederverwendet wird. Insbesondere kann dadurch ein hohes Maß an Energie und CO2-Ausstoß eingespart werden.

In einer alternativen bevorzugten Ausführungsform umfasst die Folie eine erste Schicht, eine zweite Schicht und eine dritte Schicht, wobei die erste Schicht ein Material mit modifizierten Adhäsionseigenschaften umfasst, wobei das Trägermaterial und die dritte Schicht aus im Wesentlichen demselben Material gebildet sind, und wobei die zweite Schicht recycelten Kunstrasenabfall umfasst.

Die Verwendung eines Materials mit modifizierten Adhäsionseigenschaften für die erste Schicht, die der Unterseite des Trägermaterials zugewandt ist, erhöht die Adhäsionskraft zwischen der ersten Schicht und dem Trägermaterial sowie zwischen der ersten Schicht und den verbundenen Bereichen der Fasern und verbessert zudem die Auszugfestigkeit der Fasern. Dadurch, dass dieselbe Materialart für das Trägermaterial und die dritte Schicht der Folie verwendet wird, kann die Recycelbarkeit des Kunstrasens verbessert werden, da keine andersartigen Materialien, wie zum Beispiel Latex oder Polyurethan darin enthalten sind. Somit kann auch die Umweltbilanz des Kunstrasens verbessert werden (insbesondere kann dadurch ein hohes Maß an Energie und CO2-Ausstoß eingespart werden). Soll dennoch Material in dem Kunstrasen verarbeitet werden, das mit anderen Materialien (z.B. Sand, Latex, Polyurethan oder Infill-Resten) kontaminiert ist, so kann die zweite Schicht der Folie ein solches Abfallmaterial umfassen. Das verschmutzte Abfallmaterial kann somit zwischen zwei im Wesentlichen reinen Schichten eingebunden und stabilisiert werden. So kommt es bei dem Blasfolien-Prozess zum Beispiel nicht zu einem unerwünschten Platzen der Schlauchblase durch Schmutzpartikel.

Gemäß einem weiteren Aspekt umfasst der Kunstrasen gemäß der vorliegenden Erfindung ferner eine Beschichtung, wobei die Beschichtung gebildet ist durch ein an der Unterseite des Kunstrasens aufgeschmolzenes Kunststoffgranulat.

Das Aufschmelzen von Kunststoffgranulat an der Unterseite des Kunstrasens bildet eine vorzugsweise durchgängige Beschichtung. Lokal ist die Beschichtung sowohl mit der Unterseite des Trägermaterials als auch mit den verbundenen Bereichen der Fasern verschmolzen und verstärkt somit die Verbindung zwischen Trägermaterial und Fasern und damit die Auszugfestigkeit der Fasern. Global, das heißt über den gesamten beschichteten Kunstrasen hinweg betrachtet, verleiht die durch das Aufschmelzen des Kunststoffgranulats entstehende Beschichtung dem beschichteten Kunstrasen eine zusätzliche Stabilität. Zudem können die Eigenschaften der Beschichtung (Festigkeit, Beschichtungsdicke, etc.) durch die Menge des Kunststoffgranulats, die chemische Zusammensetzung des Kunststoffgranulats, das Maß und die Dauer der Wärmeeinbringung und der Druckeinbringung von der Kalanderwalze bzw. den Anpresswalzen flexibel an die Anforderungen an den beschichteten Kunstrasen angepasst werden.

Der Kunstrasen gemäß der vorliegenden Erfindung wird bevorzugt gemäß einem der hier näher erläuterten erfindungsgemäßen Verfahren hergestellt.

Ferner wird eine Vorrichtung zur Herstellung eines Kunstrasens mit einem Verfahren gemäß der vorliegenden Offenbarung vorschlagen. Die Vorrichtung kann eine beheizbare und rotierbare Kalanderwalze umfassen, Mittel zum Bereitstellen eines Trägermaterials mit einer Oberseite und einer Unterseite, Mittel zum Bereitstellen von einer Mehrzahl von Fasern, wobei jede Faser zwei Enden umfasst, welche sich von der Oberseite des Trägermaterials erstrecken, und einen verbundenen Bereich umfasst, welcher an der Unterseite des Trägermaterials schlaufenartig angeordnet ist, Mittel zum Zuführen des Trägermaterials mit den Fasern zu der Kalanderwalze, Mittel zum Führen des Trägermaterials mit den Fasern über zumindest einen Teilbereich der Oberfläche der Kalanderwalze, wobei die verbundenen Bereiche der Fasern und die Unterseite des Trägermaterials der Kalanderwalze zugewandt sind, Mittel zum Übertragen von Wärme von der Kalanderwalze zu dem Trägermaterial mit den Fasern während des Führens des Trägermaterials mit den Fasern über den zumindest einen Teilbereich der Oberfläche der Kalanderwalze, Mittel zum Verschmelzen der verbundenen Bereiche der Fasern mit der Unterseite des Trägermaterials zu dem Kunstrasen während des Führens des Trägermaterials mit den Fasern über den zumindest einen Teilbereich der Oberfläche der Kalanderwalze, Mittel zum Prägen einer Unterseite des Kunstrasens, wobei das Prägen einen vertieften Bereich der Unterseite des Kunstrasens bildet, und Mittel zum Abführen und Abkühlen des Kunstrasens.

Die Vorrichtung kann zur Herstellung eines Kunstrasens gemäß der vorliegenden Offenbarung geeignet sein.

Die Erfindung wird im Folgenden anhand von in den beigefügten Figuren dargestellten Ausführungsformen erläutert. Es zeigen:

### Liste der Figuren

**Fig. 1** eine schematische Seitenansicht einer Vorrichtung zur Durchführung des Verfahrens zur Herstellung eines Kunstrasens gemäß einer Ausführungsform der vorliegenden Erfindung;
**Fig. 2a** eine vergrößerte schematische Seitenansicht einer Kalanderwalze und einer Mehrzahl von Anpresswalzen der Vorrichtung aus Fig. 1, während der Durchführung eines erfindungsgemäßen Verfahrens zur Herstellung eines Kunstrasens, gemäß einer Ausführungsform der vorliegenden Erfindung;
**Fig. 2b** eine vergrößerte schematische Seitenansicht einer Kalanderwalze und einer Mehrzahl von Anpresswalzen, während der Durchführung eines erfindungsgemäßen Verfahrens zur Herstellung eines Kunstrasens, gemäß einer Ausführungsform der vorliegenden Erfindung;
**Fig. 2c** eine vergrößerte schematische Seitenansicht einer Kalanderwalze und einer Mehrzahl von Anpresswalzen, während der Durchführung eines erfindungsgemäßen Verfahrens zur Herstellung eines Kunstrasens, gemäß einer Ausführungsform der vorliegenden Erfindung;
**Fig. 3** eine schematische Seitenansicht eines Ausschnitts eines Kunstrasens, der mit einem erfindungsgemäßen Verfahren hergestellt ist;
**Fig. 4A** eine schematische Darstellung eines Kunstrasens, der mit einem erfindungsgemäßen Verfahren hergestellt ist, von unten betrachtet;
**Fig. 4B** eine schematische Darstellung eines Kunstrasens, der mit einem erfindungsgemäßen Verfahren hergestellt ist, von unten betrachtet;
**Fig. 4C** schematische Querschnitte des Kunstrasens aus Fig. 4B entlang der Linie B;
**Fig. 5A** ein Bild eines Ausschnitts eines getufteten Trägermaterials, das zur Herstellung eines Kunstrasens mit dem erfindungsgemäßen Verfahren verwendet werden kann, von unten betrachtet;
**Fig. 5B** ein Bild eines Ausschnitts eines Kunstrasens, der mit einem erfindungsgemäßen Verfahren hergestellt werden kann, vor einer erfindungsgemäßen Prägung, von unten betrachtet;
**Fig. 5C** eine schematische Darstellung eines Kunstrasens, der mit einem erfindungsgemäßen Verfahren hergestellt werden kann, vor einer erfindungsgemäßen Prägung, betrachtet von einer Unterseite;
**Fig. 5D** eine schematische Darstellung eines Kunstrasens, der mit einem erfindungsgemäßen Verfahren hergestellt ist, betrachtet von einer Unterseite;
**Fig. 5E** eine schematische Darstellung eines Kunstrasens, der mit einem erfindungsgemäßen Verfahren hergestellt ist, betrachtet von einer Unterseite;
**Fig. 5F** schematische Querschnitte des Kunstrasens aus Fig. 5E entlang der Linie B';
**Fig. 5G** ein Foto einer Unterseite eines Kunstrasens, der mit einem erfindungsgemäßen Verfahren hergestellt worden ist;
**Fig. 6** eine schematische Seitenansicht einer Vorrichtung zur Durchführung des Verfahrens zur Herstellung eines Kunstrasens gemäß einer weiteren Ausführungsform der vorliegenden Erfindung;
**Fig. 7** eine schematische Detailansicht eines Kunstrasens gemäß einer Ausführungsform der vorliegenden Erfindung;
**Fig. 8** eine schematische Seitenansicht einer Vorrichtung zur Durchführung des Verfahrens zur Herstellung eines Kunstrasens gemäß einer weiteren Ausführungsform der vorliegenden Erfindung;
**Fig. 9** eine schematische Seitenansicht eines Ausschnitts eines Kunstrasens, der mit einem erfindungsgemäßen Verfahren hergestellt ist.

### Detaillierte Beschreibung

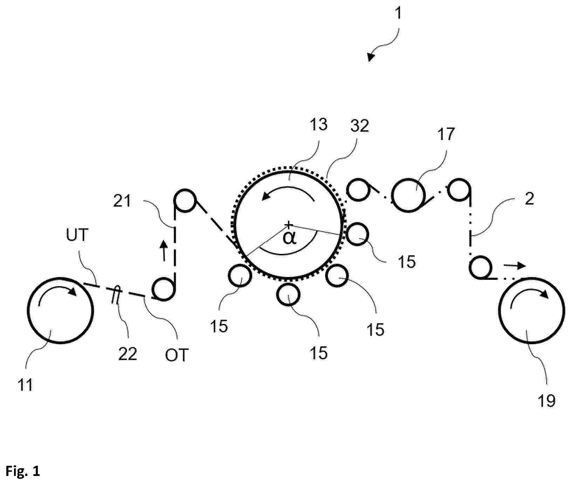

In den Figuren 1, 5 und 7 werden das Trägermaterial 21 mit einer gestrichelten Linie, die Folie 23 mit einer Strichpunktlinie mit einem Punkt, und der Kunstrasen 2, 2' mit einer Strichpunktlinie mit zwei Punkten dargestellt.

Die in der Fig. 1 gezeigte Vorrichtung 1 umfasst in der dargestellten Ausführungsform eine Magazinrolle 11 für Trägermaterial 21, eine Mehrzahl von Umlenkrollen, eine Kalanderwalze 13, eine Mehrzahl von Anpresswalzen 15, zumindest eine Kühlrolle 17, sowie eine Magazinrolle 19 für Kunstrasen 2.

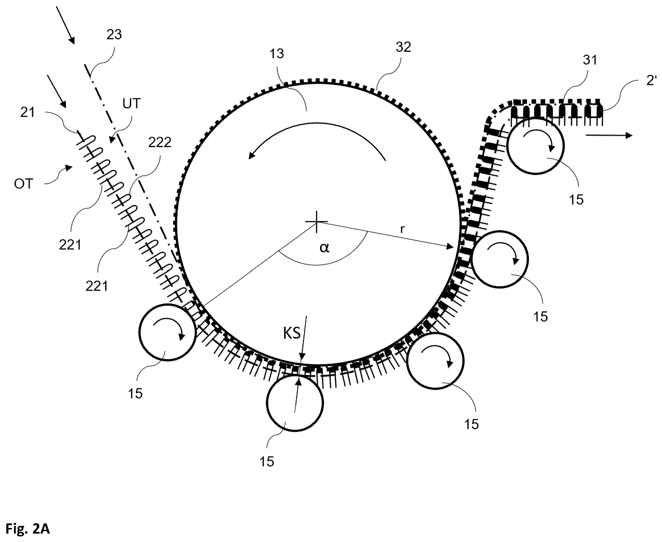

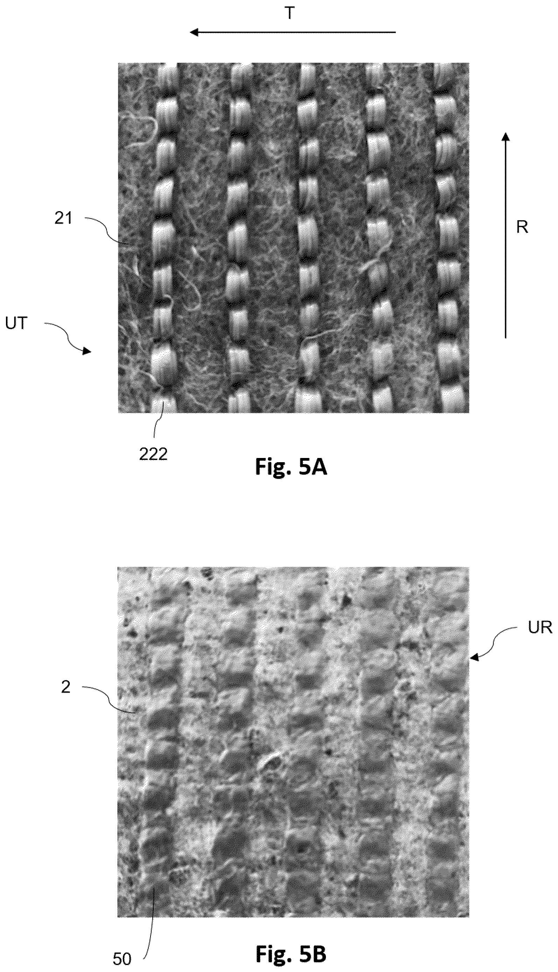

Das Trägermaterial 21 ist auf der Magazinrolle 11 bereitgestellt. Vorzugsweise umfasst das Trägermaterial 21 eine Gewebestruktur aus beispielsweise PE und/oder PP (so genannte PE-und/oder PP-Trägerbändchen vom Typ Slit Film), die für z.B. Regenwasser durchlässig. Ebenfalls kann das Trägermaterial 21 eine Gewebestruktur aus co-extrudierten Monofilamenten und Bändchen bestehen, um Materialien mit unterschiedlichen Schmelzpunkten vorteilhaft kombinieren zu können. Das Trägermaterial 21 umfasst eine Oberseite OT und eine Unterseite UT und ist mit einer Mehrzahl von Fasern 22 versehen. Aus Darstellungsgründen ist in der Fig. 1 exemplarisch lediglich eine Faser 22 dargestellt. Wie in den Fig. 2A-2C dargestellt ist, umfasst jede Faser 22 zwei freie Enden 221, welche sich von der Oberseite OT des Trägermaterials 21 erstrecken, und einen verbundenen Bereich 222, welcher an der Unterseite UT des Trägermaterials 21 schlaufenartig angeordnet ist. In anderen Worten sind die Fasern 22 zunächst lose mit den freien Enden 221 in das Trägermaterial 21 hineingesteckt. Diese Anordnung von zumindest einer Faser 22 im Trägermaterial 21 wird als Tuft bezeichnet. Dabei können die Fasern 22 entweder einzeln oder in Bündeln und nach einem gewissen Muster oder ohne ein Muster an dem Trägermaterial 21 angeordnet sein. Ein Trägermaterial 21, welches auf diese Weise mit einer Mehrzahl von Fasern 22 versehen ist, wird auch als getuftetes Trägermaterial 21 bezeichnet. In der Fig. 5A ist ein Ausschnitt eines getufteten Trägermaterials 21 von unten gezeigt. Dabei sind die Fasern 22 in Bündeln und in Reihen an dem Trägermaterial 21 angeordnet. Der vertikale Pfeil R gibt eine Reihenrichtung der Tuftreihen an und der horizontale Pfeil T gibt eine Teilungsrichtung an, die im Wesentlichen orthogonal zu der Reihenrichtung ist. Die erkennbaren verbundenen Bereiche 222 der Fasern (auch genannt Faserschlaufen) sind dabei noch nicht fest untereinander und mit dem Trägermaterial 21 (auch genannt Backing) verbunden. Die Reihenrichtung kann die Längsrichtung sein, kann also beispielsweise die Richtung sein, in der der Kunstrasen aufgerollt wird und/oder in der das Trägermaterial mit den Fasern über die Kalanderwalze geführt wird.

Von der Magazinrolle 11 wird das getuftete Trägermaterial 21 abgerollt und über Umlenkrollen in Richtung der Kalanderwalze 13 geführt, was durch einen Pfeil entlang des Trägermaterials 21 auf der linken Seite in den Figuren 1 und 2A-2C dargestellt ist.

Die Kalanderwalze 13 weist einen vorbestimmten Radius r auf und wird über einen Motor (nicht dargestellt) rotatorisch angetrieben, wobei die Drehrichtung der Kalanderwalze 13 in den Figuren 1 und 2A-2C durch einen Pfeil entgegen des Uhrzeigersinns dargestellt ist. Die Umdrehungsgeschwindigkeit der Kalanderwalze 13 ist dabei anpassbar. Ferner ist die Kalanderwalze 13 beheizbar (beispielsweise über ein integriertes Heizsystem, nicht dargestellt), wodurch die Oberfläche der Kalanderwalze 13 auf eine vorbestimmte Temperatur erwärmt werden kann. In der in den Figuren 1 und 2A-2C dargestellten Ausführungsform sind benachbart zu der Kalanderwalze 13 mehrere Anpresswalzen 15 in einem vorbestimmten anpassbaren Abstand zu der Kalanderwalze 13, nachfolgend als Kalanderspalt KS bezeichnet, angeordnet. Die Anpresswalzen 15 sind im Wesentlichen achsenparallel zu der Rotationsachse der Kalanderwalze 13 angeordnet und ebenfalls rotierbar gelagert, wobei die Drehrichtung der Anpresswalzen 15 in den Fig. 2A-2C durch Pfeile im Uhrzeigersinn dargestellt ist. Die Anpresswalzen 15 in der beschriebenen Ausführungsform können sowohl passive Anpresswalzen (nicht angetrieben) als auch aktive Anpresswalzen (rotatorisch angetrieben) sein.

Das getuftete Trägermaterial 21 wird auf die rotierende und beheizte Kalanderwalze 13 geführt. Die Unterseite UT des Trägermaterials 21 und die verbundenen Bereiche 222 der Fasern 22 sind dabei der Oberfläche der Kalanderwalze 13 zugewandt und die Oberseite OT des Trägermaterials 21 und freien Enden 221 der Fasern 22 sind von der Oberfläche der Kalanderwalze 13 abgewandt. Das Trägermaterial 21 wird zwischen der Oberfläche der Kalanderwalze 13 und den Anpresswalzen 15 geführt. Dabei können die Anpresswalzen 15 einen Druck auf das Trägermaterial 21 und die Fasern 22 ausüben, der durch eine Anpassung des Kalanderspalts KS verändert werden kann. Wie in den Figuren 1 und 2A-2C gezeigt ist, wird das getuftete Trägermaterial 21 über einen vorbestimmten Teilbereich der Manteloberfläche der Kalanderwalze 13 geführt, welcher über den Winkel α definiert ist. In anderen Worten kommt das Trägermaterial 21 mit der Mehrzahl von Fasern 22 in einem vorbestimmten Mantelflächensegment, das durch den Winkel α definiert wird, mit der Oberfläche der Kalanderwalze 13 in Kontakt. Dieser Winkel α kann durch eine Anpassung der Anordnung der Umlenkrollen relativ zu der Kalanderwalze 13 verändert werden.

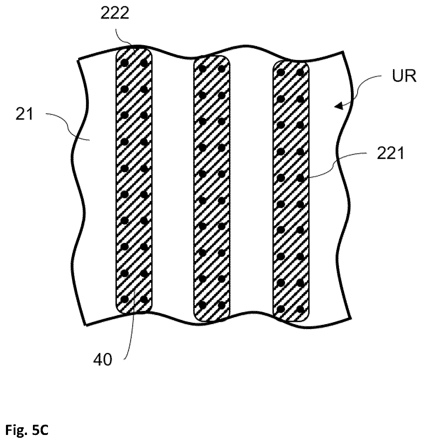

Während das getuftete Trägermaterial 21 über die Kalanderwalze 13 geführt wird, überträgt die Kalanderwalze 13 Wärme an die Unterseite UT des Trägermaterials 21 und an die verbundenen Bereiche 222 der Fasern 22, um sie miteinander zu verschmelzen. Die Festigkeit der Verbindung zwischen den Fasern 22 und dem Trägermaterial 21 wird im Wesentlichen von der Temperatur der Kalanderwalze 13, der Umdrehungsgeschwindigkeit der Kalanderwalze 13, dem Winkel α, sowie dem von den Anpresswalzen 15 auf das Trägermaterial 21 und die Fasern 22 ausgeübten Druck beeinflusst. Die Temperatur an der Oberfläche der Kalanderwalze 13 ist größer oder gleich der Schmelztemperaturen des Trägermaterials 21 und der Fasern 22 eingestellt, so dass die verbundenen Bereiche der Fasern 22 mit der Unterseite UT des Trägermaterials 21 verschmolzen werden und den Kunstrasen 2 bilden. Die Umdrehungsgeschwindigkeit der Kalanderwalze 13 bestimmt zusammen mit dem Radius r und dem Winkel α im Wesentlichen die Verweilzeit. Die Verweilzeit ist diejenige Zeit, in der das getuftete Trägermaterial 21 mit der Kalanderwalze 13 in Kontakt steht und Wärmeenergie von der Kalanderwalze 13 aufnehmen kann. Mit fortschreitender Verweilzeit des getufteten Trägermaterials 21 auf der Kalanderwalze 13 bildet sich zunehmend eine Schmelzverbindung zwischen dem Trägermaterial 21 und den verbundenen Bereichen 222 der Fasern 22 aus. Eine längere Verweilzeit des getufteten Trägermaterials 21 auf der Kalanderwalze 13 führt dabei zu einer höheren Festigkeit der Schmelzverbindung, was in den Fig. 2A-2C durch den größer werdenden verschmolzenen Bereich (schwarzer Bereich an der Unterseite UT des getufteten Trägermaterials 21) dargestellt ist. Der Druck von den Anpresswalzen 15 gegen das getuftete Trägermaterial 21 in Richtung der Kalanderwalze beeinflusst ebenfalls die Festigkeit und die Qualität der Verbindung zwischen den Fasern 22 und dem Trägermaterial 21. Ein höherer Anpressdruck kann das Verschmelzen zwischen Fasern 22 und Trägermaterial 21 beschleunigen und die Verbindung zwischen den Fasern 22 und dem Trägermaterial 21 stärken. Zudem wird durch den von den Anpresswalzen 15 bereitgestellten Anpressdruck Luft aus dem Verbund zwischen Trägermaterial 21 und Fasern 22 herausgedrückt. Die vorstehend genannten Prozessparameter werden vorzugsweise derart eingestellt, dass die Schmelzverbindung zwischen den verbundenen Bereichen 222 und dem Trägermaterial 21 beim Verlassen des Kunstrasens 2 von der Kalanderwalze 13 vollständig ausgebildet ist. Die Unterseite UT eines Trägermaterials 21, bei dem die verbundenen Bereiche 222 der Fasern 22 mit dem Trägermaterial 21 verschmolzen sind und somit den Kunstrasen 2 bilden, ist in der Fig. 5B gezeigt, in der der Kunstrasen noch nicht geprägt ist. Es ist zu beachten, dass sich bei dem in der Fig. 5B gezeigten Kunstrasen, der mit dem erfindungsgemäßen Verfahren hergestellt wird und noch nicht geprägt ist, durch das Verschmelzen Reihen gebildet haben, indem sich benachbarte Fasern miteinander verschmolzen haben. Dies wirkt sich ebenfalls positiv auf die Auszugfestigkeit aus. In der Fig. 5C ist zudem eine schematische geschnittene Ansicht des Kunstrasens 2 aus Fig. 5B gezeigt. Die Reihen, die sich durch das Verschmelzen der Fasern 22 mit dem Trägermaterial 21 gebildet haben, sind schraffiert dargestellt. In dieser geschnittenen Ansicht sind die freiliegenden Enden 221 als schwarze Punkte dargestellt. Die Reihen sind erhabene Bereiche 40. Die Reihen enthalten verschmolzene Bereiche.

Die Kalanderwalze 13 enthält ein Prägewerk 32, mittels dessen eine Unterseite des Kunstrasens geprägt wird. Die geprägte Unterseite kann mit dem Bezugszeichen 31 bezeichnet sein. Das Prägen bildet einen oder mehrere vertiefte Bereiche 40 an der Unterseite des Kunstrasens. Das Prägewerk 32 muss nicht in der Kalanderwalze enthalten sein, und kann bespielsweise auch an anderer Stelle der Vorrichtung 1 enthalten sein. Verschiedene Anordnungen des Prägewerks 32 in der Vorrichtung 1 werden in den Figuren 2A-2C illustriert, die weiter unten erläutert werden.

Bei der in Figur 1 und in Figur 2A gezeigten Vorrichtung erfolgt der Schritt des Prägens einer Unterseite des Kunstrasens während des Schritts des Verschmelzens der verbundenen Bereiche der Fasern mit der Unterseite des Trägermaterials zu dem Kunstrasen.

Der Schritt des Prägens einer Unterseite des Kunstrasens kann auch nach dem Schritt des Verschmelzens der verbundenen Bereiche der Fasern mit der Unterseite des Trägermaterials zu dem Kunstrasen erfolgen.

Nachdem die verbundenen Bereiche 222 der Fasern 22 mit der Unterseite UT des Trägermaterials 21 verschmolzen sind, wird der Kunstrasen 2 von der Kalanderwalze 13 weggeführt und abgekühlt. Wie in der Fig. 1 dargestellt ist, kann der Kunstrasen 2 durch ein Führen des Kunstrasens 2 über eine rotierende Kühlrolle 17 gekühlt werden. Dabei kann die Kühlrolle 17 entweder passiv kühlend (z.B. Raumtemperatur oder darüber) wirken oder aktiv kühlend wirken, wobei die aktiv gekühlte Kühlrolle 17 über ein Kühlaggregat (nicht dargestellt) auf eine vorbestimmte Temperatur unterhalb der Raumtemperatur gekühlt wird. Der gekühlte Kunstrasen 2 wird anschließend von der Kühlrolle 17 weggeführt und auf einer Magazinrolle 19 für Kunstrasen 2 aufgerollt und magaziniert.

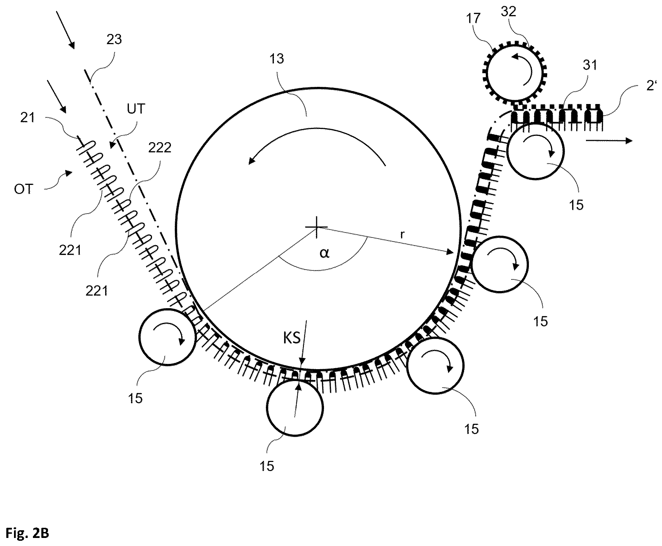

Die Kühlrolle 17 kann, wie in Fig. 2B gezeigt, ein Prägewerk 32 enthalten, und die Unterseite des Kunstrasens kann mittels der Kühlrolle 17 geprägt werden.

Hier erfolgt der Schritt des Prägens einer Unterseite des Kunstrasens nach dem Schritt des Verschmelzens der verbundenen Bereiche der Fasern mit der Unterseite des Trägermaterials zu dem Kunstrasen.

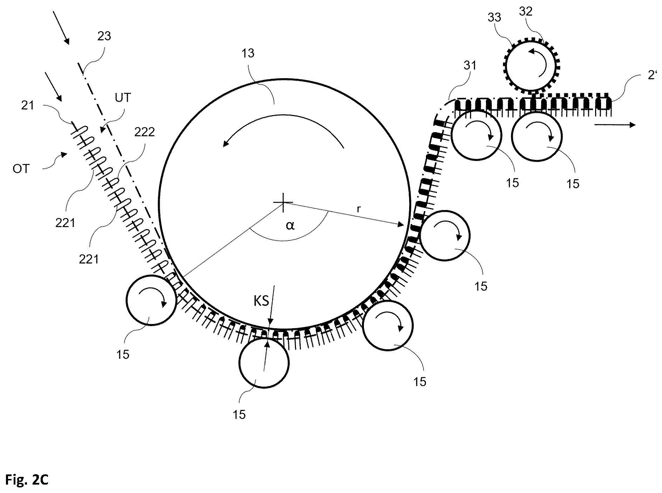

Die Vorrichtung 1 kann, wie in Fig. 2C gezeigt, eine Prägewalze 33 enthalten, die ein Prägewerk 32 enthält, und die Unterseite des Kunstrasens kann mittels der Prägewalze 33 geprägt werden.

Hier erfolgt der Schritt des Prägens einer Unterseite des Kunstrasens nach dem Schritt des Verschmelzens der verbundenen Bereiche der Fasern mit der Unterseite des Trägermaterials zu dem Kunstrasen.

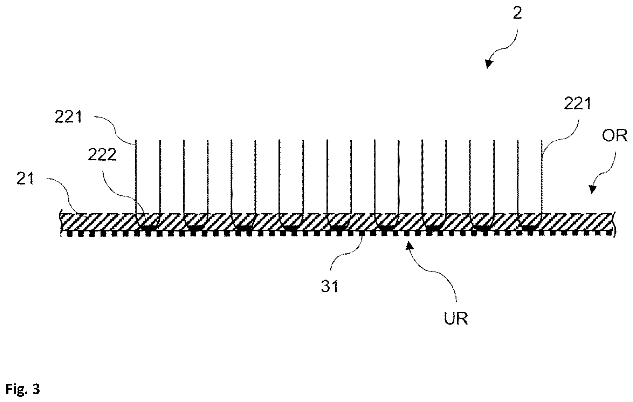

Fig. 3 zeigt eine schematische geschnittene Seitenansicht des Kunstrasens 2 gemäß einer Ausführungsform der vorliegenden Erfindung. Der erfindungsgemäße Kunstrasen 2 umfasst ein Trägermaterial 21 und eine Mehrzahl von darin eingetufteten Fasern 22. Die Fasern 22 umfassen zwei freiliegende Enden 221, die sich von einer Oberseite OR des Kunstrasens 2 erstrecken, sowie einen verbundenen Bereich 222, der an einer Unterseite UR des Kunstrasens 2 schlaufenartig angeordnet ist. An diesem verbundenen Bereich 222 sind die Fasern 22 mit dem Trägermaterial 21 über eine Schmelzverbindung verbunden, was durch einen dunklen Bereich in der Figur 3 dargestellt ist. Das Trägermaterial 21 und die Fasern 22 können im Wesentlichen aus demselben Material gebildet sein und beispielsweise aus PE oder PP bestehen. Die Wahl von denselben Materialien verringert die Anzahl an verschiedenen verwendeten Materialien in dem Kunstrasen 2, was sich positiv auf die Recycelbarkeit und die Umweltverträglichkeit auswirkt. Die Unterseite UR des Kunstrasens 2 enthält eine Prägung 31, in der ein vertiefter Bereich gebildet ist.

Die Oberseite OR des Kunstrasens 2 kann der Oberseite OT des Trägermaterials 21 entsprechen. Die Unterseite UR des Kunstrasens 2 kann der Unterseite UT des Trägermaterials 21 entsprechen.

Der Kunstrasen 2 kann ferner eine Folie 23 umfassen (in Fig. 3 nicht gezeigt), die an der gesamten Unterseite UT des Trägermaterials 21 angeordnet sein kann. Die Folie 23 kann sowohl mit der Unterseite UT des Trägermaterials 21 als auch mit den verbundenen Bereichen 222 der Fasern 22 verbunden sein. Dadurch kann einerseits die Verbindung zwischen den Fasern 22 und dem Trägermaterial 21 gestärkt werden, was in der Praxis oftmals anhand der Auszugfestigkeit gemessen wird. Andererseits kann dadurch die Stabilität des gesamten Kunstrasens 2 erhöht werden.

Die Folie 23 kann eine einschichtige Folie sein (auch genannt Monofolie). Die Folie 23 kann im Wesentlichen aus demselben Material gebildet sein, wie das Trägermaterial 21. Auch die Wahl von denselben Materialien von dem Trägermaterial 21 und der Folie 23 verringert die Anzahl an verschiedenen verwendeten Materialien in dem Kunstrasen was sich ebenfalls positiv auf die Recycelbarkeit und die Umweltverträglichkeit auswirkt. Darüber hinaus kann die Folie 23 aus recyceltem Material, wie zum Beispiel Kunstrasenabfällen von alten Kunstrasen, bestehen. Dies ermöglicht die Realisierung eines geschlossenen Abfallkreislaufs und eine Reduktion des CO2-Ausstoßes des hergestellten Kunstrasens.

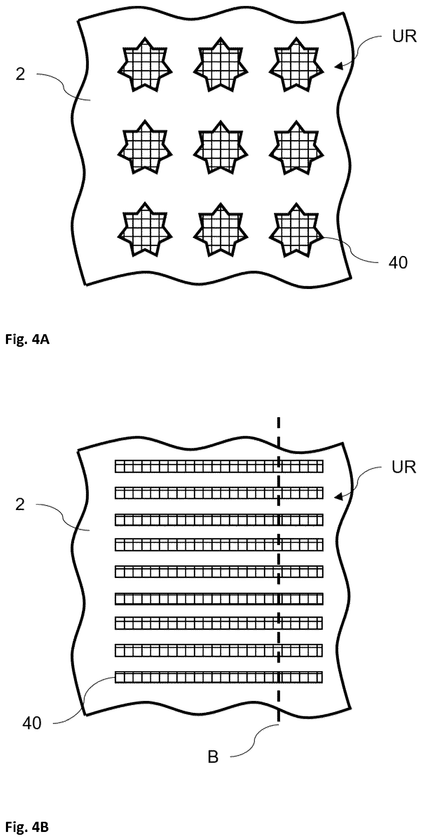

In den Figuren 4A-4C, 5C-5F sind vertiefte Bereiche 40 und erhabene Bereiche 50 zusätzlich mit entsprechenden Schraffierungen/Musterungen angegeben.

Fig. 4A zeigt eine schematische Darstellung eines Kunstrasens 2, der mit einem erfindungsgemäßen Verfahren hergestellt ist, von unten betrachtet. Die Unterseite UR des Kunstrasens 2 enthält mehrere vertiefte Bereiche 40, die sternförmig sein können. Die vertieften Bereiche 40 können beispielsweise auch die Form von Polygonen haben.

Fig. 4B zeigt eine schematische Darstellung eines Kunstrasens 2, der mit einem erfindungsgemäßen Verfahren hergestellt ist, von unten betrachtet. Die Unterseite UR des Kunstrasens 2 enthält mehrere vertiefte Bereiche 40, die rillenförmig sind.

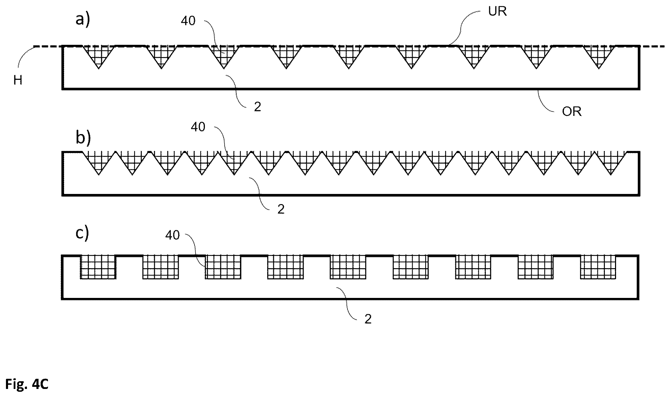

Fig. 4C zeigt drei mögliche schematische Querschnitte a)-c) des Kunstrasens aus Fig. 4B entlang der Linie B aus Fig. 4B. In Querschnitt a) haben die vertieften Bereiche 40 einen dreiecksförmigen Querschnitt. Die vertieften Bereiche 40 können beispielsweise eine Pyramidenform haben. In Querschnitt b) haben die vertieften Bereiche 40 im Querschnitt eine Sägezahnform. Es kann sich um einen einzelnen vertieften Bereich 40 handeln, das heißt, dass die Dreiecke in Querschnitt b) miteinander verbunden sind, oder um eine Mehrzahl von vertieften Bereichen 40, das heißt, dass die Dreiecke in b) nicht miteinander verbunden sind. In Querschnitt c) haben die vertieften Bereiche einen rechteckigen Querschnitt. Die Unterseite UR des Kunstrasens hat eine Hauptebene H, die durch eine gestrichelte Linie angezeigt wird.

Die Form der vertieften Bereiche 40 kann auf der Form des Prägewerks 32 basieren.

Die Bezugszeichen H, UR und OR sind aus Gründen der Übersichtlichkeit bei b) und c) nicht erneut aufgeführt, hierfür wird auf a) verwiesen.

Fig. 5A zeigt ein Bild eines Ausschnitts eines getufteten Trägermaterials, das zur Herstellung eines Kunstrasens mit einem erfindungsgemäßen Verfahren verwendet werden kann, von unten betrachtet. Dabei sind die Fasern 22 in Bündeln und in Reihen an dem Trägermaterial 21 angeordnet. Der vertikale Pfeil R gibt eine Reihenrichtung der Tuftreihen an und der horizontale Pfeil T gibt eine Teilungsrichtung an, die im Wesentlichen orthogonal zu der Reihenrichtung ist. Die erkennbaren verbundenen Bereiche 222 der Fasern (auch genannt Faserschlaufen) sind dabei noch nicht fest untereinander und mit dem Trägermaterial 21 (auch genannt Backing) verbunden.

Fig. 5B zeigt ein Bild eines Ausschnitts eines Kunstrasens, der mit einem erfindungsgemäßen Verfahren hergestellt werden kann, vor einer erfindungsgemäßen Prägung, von unten betrachtet. Die Unterseite UT eines Trägermaterials 21, bei dem die verbundenen Bereiche 222 der Fasern 22 mit dem Trägermaterial 21 verschmolzen sind und somit den Kunstrasen 2 bilden, ist gezeigt. Der Kunstrasen ist noch nicht geprägt. Durch das Verschmelzen haben sich Reihen gebildet, indem sich benachbarte Faserbündel Fasern miteinander verschmolzen haben. Die Reihen sind erhabene Bereiche 50. Die Reihen enthalten verschmolzene Bereiche.

Fig. 5C zeigt eine geschnittene Ansicht des Kunstrasens 2 aus Fig. 5B, vor einer erfindungsgemäßen Prägung, betrachtet von einer Unterseite. Die Reihen, die sich durch das Verschmelzen der Fasern 22 mit dem Trägermaterial 21 gebildet haben, sind schraffiert dargestellt. Die Reihen entsprechen hier erhabenen Bereichen 40. In dieser geschnittenen Ansicht sind die freiliegenden Enden 221 als schwarze Punkte dargestellt.

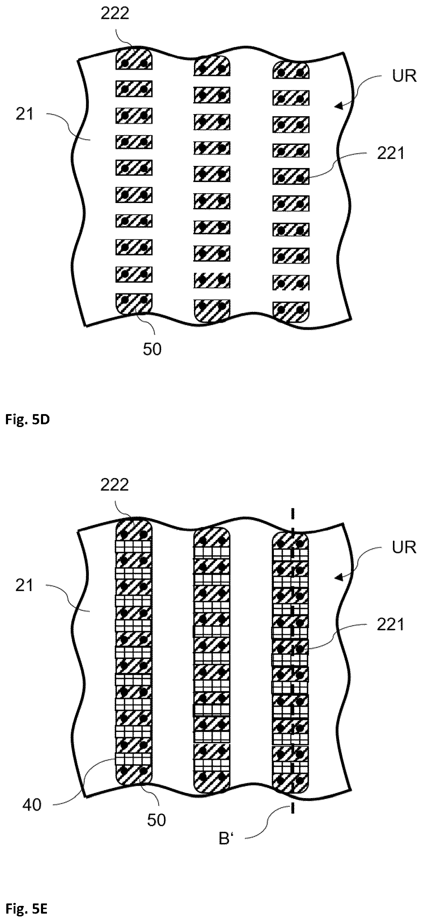

Fig. 5D zeigt schematisch den Kunstrasen aus Fig. 5C, von unten betrachtet, nach einem erfindungsgemäßen Prägeschritt. Die vertieften Bereiche 40 sind nicht gekennzeichnet. Aus dem Vergleich mit Fig. 5C ist ersichtlich, dass das Prägen die verschmolzenen Bereichen, das heißt die Reihen beziehungsweise die erhabenen Bereichen 50 unterbrochen hat.

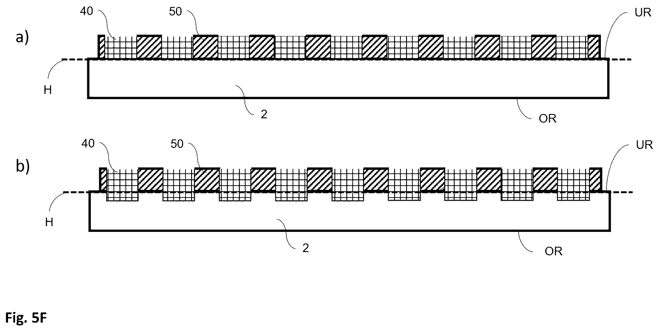

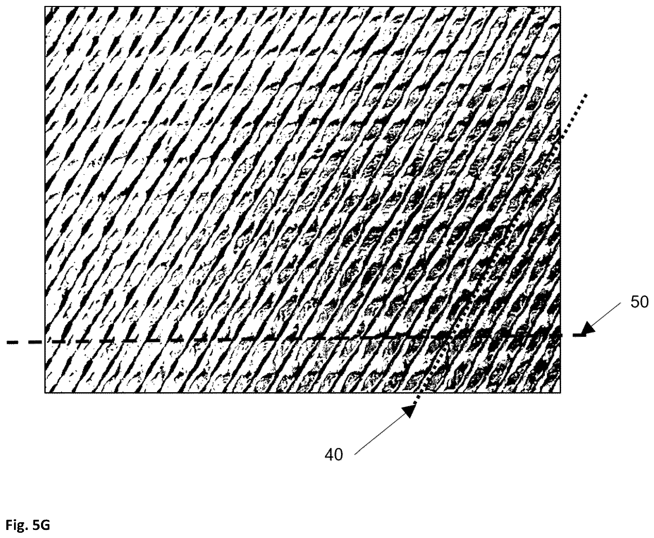

Fig. 5E zeigt schematisch den Kunstrasen aus Fig. 5, von unten betrachtet, nach einem erfindungsgemäßen Prägeschritt. Die vertieften Bereiche 40 verringern die Höhe der erhabenen Bereiche 50 abschnittsweise. Das abschnittsweise Verringern der Höhe der erhabenen Bereiche 50 kann die Höhe um 100% verringern, das heißt, die erhabenen Bereiche 50 unterbrechen, oder um mehr als 100% verringern, oder um weniger als 100% verringern.

Fig. 5F zeigt schematische Querschnitte des Kunstrasens aus Fig. 5E entlang der Linie B'. In Querschnitt a) ist die Höhe des erhabenen Bereichs 50 abschnittsweise um 100% verringert, das heißt, unterbrochen. In Querschnitt b) ist die Höhe abschnittsweise um mehr als 100% verringert. H bezeichnet die Hauptebene der Unterseite UR des Kunstrasens 2, die durch eine gestrichelte Linie angezeigt wird. OR bezeichnet die Oberseite des Kunstrasens 2.

Fig. 5G ist ein Foto einer Unterseite eines Kunstrasens, der mit einem erfindungsgemäßen Verfahren hergestellt worden ist. Die vertieften Bereiche haben die Form von schrägen Rillen. Erhabene Bereiche erstrecken sich in der Form von Reihen im Foto von links nach rechts. Zur Verdeutlichung ist einer der vertieften Bereiche 40 mit einer gepunkteten Linie angegeben, und einer der erhabenen Bereiche 50, der durch die vertieften Bereiche 40 unterbrochen wird, mit einer gestrichelten Linie angegeben.

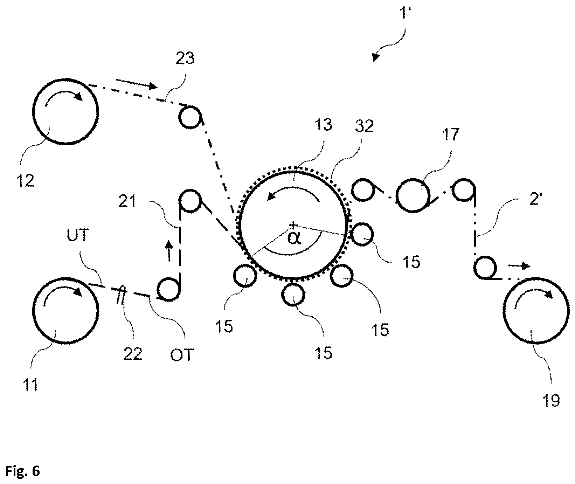

Fig. 6 zeigt eine schematische Seitenansicht einer Vorrichtung 1' zur Durchführung des Verfahrens zur Herstellung eines Kunstrasens 2' gemäß einer weiteren Ausführungsform der vorliegenden Erfindung. Die Vorrichtung 1' umfasst in der dargestellten Ausführungsform eine Magazinrolle 11 für Trägermaterial 21, eine Magazinrolle 12 für eine Folie 23, eine Mehrzahl von Umlenkrollen, eine Kalanderwalze 13, eine Mehrzahl von Anpresswalzen 15, zumindest eine Kühlrolle 17, sowie eine Magazinrolle 19 für Kunstrasen 2'. Die Schritte des Bereitstellens eines Trägermaterials 21, des Bereitstellens einer Mehrzahl von Fasern 22 und des Zuführens des Trägermaterials 21 mit den Fasern 22 zu einer beheizten rotierenden Kalanderwalze 13 sind im Wesentlichen identisch mit der vorstehend beschriebenen Ausführungsform, die in den Figuren 1 und 2A gezeigt wird, weshalb auf eine wiederholte Beschreibung dieser Schritte verzichtet wird.

Wie in der Figuren 6 dargestellt ist, wird neben dem getufteten Trägermaterial 21 eine Folie 23 von der Magazinrolle 12 abgerollt und über Umlenkrollen zu der beheizten rotierenden Kalanderwalze 13 zugeführt, was durch einen Pfeil auf der linken Seite in der Figur 6 dargestellt ist.

Die Folie 23 wird dabei an der Unterseite des getufteten Trägermaterials 21 geführt. Die Unterseite UT des Trägermaterials 21 und die verbundenen Bereiche 222 der Fasern 22 sind der Oberfläche der Kalanderwalze 13 zugewandt, die Oberseite OT des Trägermaterials 21 und freien Enden 221 der Fasern 22 sind von der Oberfläche der Kalanderwalze 13 abgewandt und die Folie 23 liegt zwischen der Unterseite UT des getufteten Trägermaterials 21 und der Kalanderwalze 13. Das Trägermaterial 21 und die Folie 23 werden zwischen der Oberfläche der Kalanderwalze 13 und den Anpresswalzen 15 geführt. Dabei können die Anpresswalzen 15 einen Druck auf das getuftete Trägermaterial 21 und die Folie 23 ausüben, der durch eine Anpassung des Kalanderspalts, KS, verändert werden kann. Wie in Figur 6 gezeigt ist, werden das getuftete Trägermaterial 21 und die Folie 23 über einen vorbestimmten Teilbereich der Manteloberfläche der Kalanderwalze 13 geführt, welcher über den Winkel α definiert ist. In anderen Worten kommt das Trägermaterial 21 mit der Mehrzahl von Fasern 22 und der Folie 23 in einem vorbestimmten Mantelflächensegment, das durch den Winkel α definiert wird, mit der Oberfläche der Kalanderwalze 13 in Kontakt. Dieser Winkel α kann durch eine Anpassung der Anordnung der Umlenkrollen relativ zu der Kalanderwalze 13 verändert werden.

Während das getuftete Trägermaterial 21 und die Folie 23 über die Kalanderwalze 13 geführt werden, überträgt die Kalanderwalze 13 Wärme an die Folie 23, die Unterseite UT des Trägermaterials 21 und an die verbundenen Bereiche 222 der Fasern 22, um sie miteinander zu verschmelzen. Die Temperatur an der Oberfläche der Kalanderwalze 13 ist größer oder gleich den Schmelztemperaturen der Folie 23, des Trägermaterials 21 und der Fasern 22 eingestellt. Dadurch werden einerseits die verbundenen Bereiche der Fasern 22 mit der Unterseite UT des Trägermaterials 21 verschmolzen. Andererseits wird in der Ausführungsform, die in Figur 6 dargestellt ist, auch die Folie 23 sowohl mit der Unterseite UT des Trägermaterials 21 als auch mit den verbundenen Bereichen der Fasern 22 verschmolzen. Mit fortschreitender Verweilzeit des getufteten Trägermaterials 21 und der Folie 23 auf der Kalanderwalze 13 bildet sich zunehmend eine Schmelzverbindung zwischen dem Trägermaterial 21, den verbundenen Bereichen 222 der Fasern 22 und der Folie 23 aus, wodurch der Kunstrasen 2' gebildet wird. Eine längere Verweilzeit des getufteten Trägermaterials 21 und der Folie 23 auf der Kalanderwalze 13 führt dabei zu einer höheren Festigkeit und Qualität der Schmelzverbindung, was in den Fig. 2A-2C durch den größer werdenden verschmolzenen Bereich (schwarzer Bereich an der Unterseite UT des getufteten Trägermaterials 21) dargestellt ist. Ein höherer Anpressdruck kann das Verschmelzen zwischen den Fasern 22, dem Trägermaterial 21 und der Folie 23 beschleunigen und die Verbindung zwischen den Fasern 22, dem Trägermaterial 21 und der Folie 23 stärken. Zudem wird durch den von den Anpresswalzen 15 bereitgestellten Anpressdruck Luft aus dem Verbund zwischen dem Trägermaterial 21, den Fasern 22 und der Folie 23 herausgedrückt. Die vorstehend genannten Prozessparameter werden vorzugsweise derart eingestellt, dass die Schmelzverbindung zwischen den verbundenen Bereichen 222, dem Trägermaterial 21 und der Folie 23 beim Verlassen des Kunstrasens 2' von der Kalanderwalze 13 vollständig ausgebildet ist.

Die vorstehend genannten Prozessparameter werden vorzugsweise derart eingestellt, dass die Schmelzverbindung zwischen den verbundenen Bereichen 222, dem Trägermaterial 21 und der Folie 23 beim Verlassen des Kunstrasens 2' von der Kalanderwalze 13 vollständig ausgebildet ist. Zusätzlich zu den vorstehend beschriebenen Prozessparametern beeinflusst die Folie 23 die Festigkeit der Verbindung zwischen den Fasern 22 und dem Trägermaterial 21. Da sich die Folie 23 lokal sowohl mit dem Trägermaterial 21 als auch mit den verbundenen Bereichen 222 Fasern 22 verbindet, wird die Verbindung zwischen dem Trägermaterial 21 und den Fasern 22 verstärkt und die Auszugfestigkeit der Fasern 22 erhöht. Darüber hinaus verbindet sich die Folie 23 global mit dem gesamten Trägermaterial 21 wodurch auch die Stabilität des Trägermaterials 21 erhöht wird.

Nachdem die verbundenen Bereiche 222 der Fasern 22, die Unterseite UT des Trägermaterials 21 und die Folie 23 verschmolzen sind, wird der Kunstrasen 2' von der Kalanderwalze 13 weggeführt und abgekühlt. Der Vorgang des Kühlens des Kunstrasens 2' und des Aufrollens und Magazinierens des Kunstrasens 2' auf einer Magazinrolle 19 geschieht analog zu der anhand der Figur 1 dargestellten Ausführungsform.

Die Kalanderwalze 13 enthält ein Prägewerk 32, mittels dessen eine Unterseite des Kunstrasens geprägt wird. Das Prägen bildet einen oder mehrere vertiefte Bereiche 40 an der Unterseite des Kunstrasens. Das Prägewerk 32 muss nicht in der Kalanderwalze enthalten sein, und kann bespielsweise auch an anderer Stelle der Vorrichtung 1 enthalten sein. Verschiedene Anordnungen des Prägewerks 32 in der Vorrichtung 1 sind in den Figuren 2A-2C illustriert, deren Offenbarung auch auf die Vorrichtung 1' anwendbar ist.

Der Schritt des Prägens einer Unterseite des Kunstrasen kann während des Schritts des Verschmelzens der verbundenen Bereiche der Fasern mit der Unterseite des Trägermaterials zu dem Kunstrasen erfolgen, beispielsweise wenn die Kalanderwalze 13 das Prägewerk 32 enthält.

Der Schritt des Prägens einer Unterseite des Kunstrasen kann nach dem Schritt des Verschmelzens der verbundenen Bereiche der Fasern mit der Unterseite des Trägermaterials zu dem Kunstrasen erfolgen, beispielsweise wenn die Kalanderwalze 13 das Prägewerk 32 nicht enthält, das Prägewerk 32 also separat von der Kalanderwalze 13 ist.

Der Schritt des Prägens einer Unterseite des Kunstrasen kann während des Schritts des Verschmelzens der Unterseite des Kunstrasens mit der Folie zu einem beschichteten Kunstrasen erfolgen, beispielsweise wenn die Kalanderwalze 13 das Prägewerk 32 enthält.

Der Schritt des Prägens einer Unterseite des Kunstrasen kann nach oder vor dem Schritt des Verschmelzens der Unterseite des Kunstrasens mit der Folie zu einem beschichteten Kunstrasen erfolgen, beispielsweise wenn die Kalanderwalze 13 das Prägewerk 32 nicht enthält, das Prägewerk 32 also separat von der Kalanderwalze 13 ist.

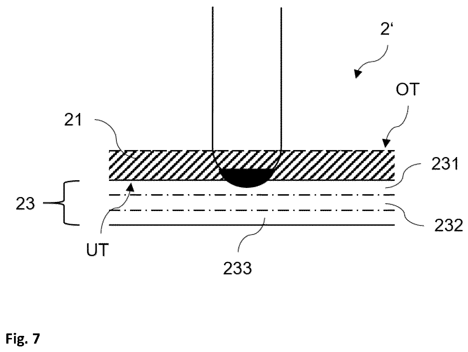

Nachfolgend wird anhand der Figur 7 der Aufbau des Kunstrasens 2' gemäß einer Ausführungsform der vorliegenden Erfindung näher beschrieben. In der Fig. 7 ist eine schematische geschnittene Seitenansicht des Kunstrasens 2' gemäß einer Ausführungsform der vorliegenden Erfindung dargestellt. Der erfindungsgemäße Kunstrasen 2' umfasst ein Trägermaterial 21 und eine Mehrzahl von darin eingetufteten Fasern 22 (in Fig. 7 ist nur eine Faser 22 gezeigt). Die Fasern 22 umfassen zwei freiliegende Enden 221, die sich von einer Oberfläche OT des Trägermaterials 21 erstrecken, sowie einen verbundenen Bereich 222, der an einer Unterseite UT des Trägermaterials 21 schlaufenartig angeordnet ist. An diesem verbundenen Bereich 222 sind die Fasern 22 mit dem Trägermaterial 21 über eine Schmelzverbindung verbunden, was durch einen dunklen Bereich in der Figur 7 dargestellt ist. Das Trägermaterial 21 und die Fasern 22 können im Wesentlichen aus demselben Material gebildet sein und beispielsweise aus PE oder PP bestehen. Die Wahl von denselben Materialien verringert die Anzahl an verschiedenen verwendeten Materialien in dem Kunstrasen 2', was sich positiv auf die Recycelbarkeit und die Umweltverträglichkeit auswirkt. Wie in der Fig. 7 dargestellt ist, kann der Kunstrasen 2' ferner eine Folie 23 umfassen, die an der gesamten Unterseite UT des Trägermaterials 21 angeordnet ist. Die Folie 23 ist sowohl mit der Unterseite UT des Trägermaterials 21 als auch mit den verbundenen Bereichen 222 der Fasern 22 verbunden. Dadurch wird einerseits die Verbindung zwischen den Fasern 22 und dem Trägermaterial 21 gestärkt, was in der Praxis oftmals anhand der Auszugfestigkeit gemessen wird. Andererseits wird dadurch die Stabilität des gesamten Kunstrasens 2' erhöht.

Die Unterseite des Kunstrasens enthält eine Prägung 31, in der ein vertiefter Bereich gebildet ist (in Fig. 7 nicht gezeigt).

In der in Fig. 7 dargestellten Ausführungsform ist die Folie 23 eine dreischichtige Folie. Die Folie 23 kann auch eine einschichtige Folie sein (auch genannt Monofolie). Die Folie 23 ist dabei mit dem vorstehend beschriebenen erfindungsgemäßen Verfahren angebracht und kann im Wesentlichen aus demselben Material gebildet sein, wie das Trägermaterial 21. Auch die Wahl von denselben Materialien von dem Trägermaterial 21 und der Folie 23 verringert die Anzahl an verschiedenen verwendeten Materialien in dem Kunstrasen 2', was sich ebenfalls positiv auf die Recycelbarkeit und die Umweltverträglichkeit auswirkt. Darüber hinaus kann die Folie 23 aus recyceltem Material, wie zum Beispiel Kunstrasenabfällen von alten Kunstrasen, bestehen. Dies ermöglicht die Realisierung eines geschlossenen Abfallkreislaufs und eine Reduktion des CO2-Ausstoßes des hergestellten Kunstrasens 2'.

Die Fig. 7 stellt eine Detailansicht eines Bereichs des Kunstrasens 2' gemäß einer Ausführungsform der vorliegenden Erfindung dar. In dieser Ausführungsform ist die Folie 23 eine mehrschichtige Folie (auch genannt Co-Extrusionsfolie). Dabei umfasst die Folie 23 eine erste Schicht 231, eine zweite Schicht 232 und eine dritte Schicht 233. Die erste Schicht 231 ist an der Unterseite UT des Trägermaterials 21 angeordnet. Die zweite Schicht 232 ist an der ersten Schicht 231 angeordnet und wird von der ersten Schicht 231 und der dritten Schicht 233 umfasst bzw. eingeschlossen. Eine solche dreischichtige Folie 23 kann beispielsweise über das Verfahren der Co-Extrusion hergestellt werden.

Gemäß einer Ausführungsform der vorliegenden Erfindung sind das Trägermaterial 21 und die dritte Schicht 233 aus im Wesentlichen demselben Material gebildet und die zweite Schicht 232 ist aus Kunstrasenabfall oder aus altem Kunstrasen gebildet. Die Verwendung von im Wesentlichen demselben Material bzw. derselben Materialart für das Trägermaterial 21 und die erste Schicht 231 und die dritte Schicht 233 erhöht die Recycelbarkeit des Kunstrasens 2', da in diesem Fall wenig bzw. keine andersartigen Materialien bzw. Materialarten (z.B. Latex, Polyurethan, etc.) in dem Kunstrasen 2' enthalten sind. Um dennoch zu ermöglichen, dass beispielsweise mit Sand, Latex, Polyurethan oder Infill-Resten kontaminiertes Material im Sinne eines geschlossenen Abfallkreislaufs bei der Herstellung des Kunstrasens wiederverwendet werden kann, so kann die zweite Schicht 232 der Folie 23 ein solches Material umfassen. Dies ist insbesondere vorteilhaft, wenn recyceltes Material aus alten Kunstrasen wiederverwendet werden soll, aber z.B. mit Latex kontaminiert ist. Das verschmutzte Abfallmaterial kann somit zwischen zwei im Wesentlichen reinen Schichten eingebunden und stabilisiert werden. So kommt es bei dem Blasfolien-Prozess zum Beispiel nicht zu einem unerwünschten Platzen der Schlauchblase durch Schmutzpartikel.

Die in der Fig. 7 dargestellte erste Schicht 231 kann auch aus einem Material gebildet sein, das modifizierte Adhäsionseigenschaften aufweist. Dabei kann einerseits zu dem vorstehend beschriebenen Material der ersten Schicht 231 ein Haftvermittler zugegeben werden, wobei der Haftvermittler zum Beispiel Maleinsäureanhydrid (MAH) umfassen kann. Andererseits kann ein Material mit schmelzekleberähnlichen Eigenschaften verwendet werden, wie zum Beispiel Ethylen-Vinylacetat (EVA). Auch denkbar ist, dass ein anderes Material als das vorstehend beschriebene mit diesen Haftvermittlern versetzt wird, um die gewünschten modifizierten Adhäsionseigenschaften zu erreichen. Die Verwendung von solchen Materialien bzw. solchen Zusätzen für das Material der ersten Schicht 231 verbessert die Haftung zwischen dem Trägermaterial 21 und der mehrschichtigen Folie 23 und die Stabilität des Kunstrasens 2'.

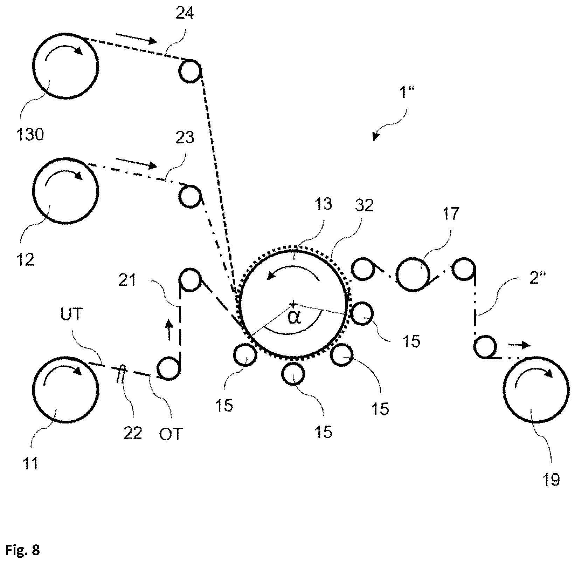

Fig. 8 zeigt eine schematische Seitenansicht einer Vorrichtung 1" zur Durchführung des Verfahrens zur Herstellung eines Kunstrasens 2" gemäß einer weiteren Ausführungsform der vorliegenden Erfindung. Verglichen mit Vorrichtung 1' der Fig. 6 enthält Vorrichtung 1" der Fig. 8 eine Magazinrolle 130 für ein Vlies 24.

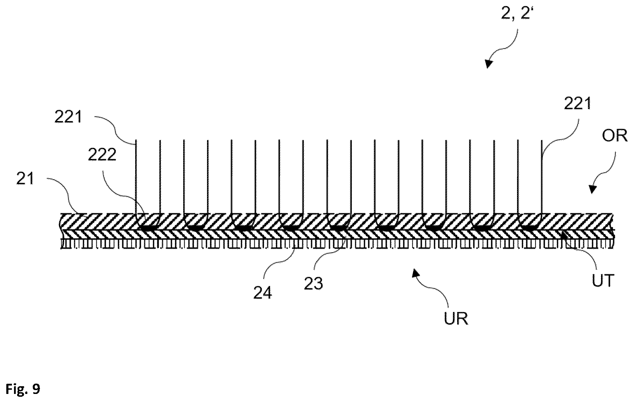

Fig. 9 zeigt eine schematische geschnittene Seitenansicht des Kunstrasens 2" gemäß einer Ausführungsform der vorliegenden Erfindung. Der erfindungsgemäße Kunstrasen 2" umfasst ein Trägermaterial 21 und eine Mehrzahl von darin eingetufteten Fasern 22. Die Fasern 22 umfassen zwei freiliegende Enden 221, die sich von einer Oberseite OR des Kunstrasens 2 erstrecken, sowie einen verbundenen Bereich 222, der an einer Unterseite UT des Trägermaterials 21 schlaufenartig angeordnet ist. An diesem verbundenen Bereich 222 sind die Fasern 22 mit dem Trägermaterial 21 über eine Schmelzverbindung verbunden, was durch einen dunklen Bereich in der Figur 9 dargestellt ist. Die Unterseite UR des Kunstrasens 2" enthält eine Prägung 31, in der ein vertiefter Bereich gebildet ist (in Fig. 9 nicht gezeigt). Die Unterseite UR des Kunstrasens 2" enthält eine Folie 23 und ein Vlies 24.

Vorstehend wurde der Fall betrachtet, dass das Trägermaterial, die Fasern und die Folie jeweils aus Kunststoffen bestehen. Im Sinne der Erfindung können das Trägermaterial, die Fasern und die Folie auch aus anderen Materialien (z.B. organische Materialien) bestehen als den hierin genannten.

Im Sinne der Erfindung schließt der Begriff Kunstrasen auch sämtliche sonstige flächige Vorrichtungen bzw. Produkte ein, die eine oder mehrere faserartige hervorstehende Elemente aufweist und erfindungsgemäß hergestellt sind.

Weitere vorteilhafte Ausgestaltungen und Abwandlungen ergeben sich für den Fachmann aus den hier beschriebenen Ausführungsbeispielen und werden von ihm als zur Erfindung gehörig verstanden.

### Liste von Bezugszeichen

- 1, 1', 1": Vorrichtung zur Herstellung von Kunstrasen
- 2, 2', 2": Kunstrasen
- 11: Magazinrolle für Trägermaterial
- 12: Magazinrolle für Folie
- 13: Kalanderwalze
- 14: Weitere Kalanderwalze
- 15: Anpresswalze
- 17: Kühlrolle
- 19: Magazinrolle für Kunstrasen
- 21: Trägermaterial
- 22: Faser
- 23: Folie
- 24: Vlies
- 31: Geprägte Unterseite des Kunstrasens
- 32: Prägewerk
- 33: Prägewalze
- 40: Vertiefter Bereich
- 50: Erhabener Bereich
- 130: Magazinrolle für Vlies
- 221: Freies Ende der Faser
- 222: Verbundener Bereich der Faser
- 231: Erste Schicht der Folie
- 232: Zweite Schicht der Folie
- 233: Dritte Schicht der Folie
- H: Hauptebene
- OR: Oberseite des Kunstrasens
- OT: Oberseite des Trägermaterials
- UR: Unterseite des Kunstrasens
- UT: Unterseite des Trägermaterials

### Weitere Beispiele für die Erfindung sind nachstehend aufgeführt:

Beispiel 1. Verfahren zur Herstellung eines Kunstrasens, umfassend die folgenden Schritte:
Bereitstellen eines Trägermaterials mit einer Oberseite und einer Unterseite;
Bereitstellen von einer Mehrzahl von Fasern, wobei jede Faser zwei Enden umfasst, welche sich von der Oberseite des Trägermaterials erstrecken, und einen verbundenen Bereich umfasst, welcher an der Unterseite des Trägermaterials schlaufenartig angeordnet ist;
Zuführen des Trägermaterials mit den Fasern zu einer beheizten rotierenden Kalanderwalze;
Führen des Trägermaterials mit den Fasern über zumindest einen Teilbereich der Oberfläche der beheizten rotierenden Kalanderwalze, wobei die verbundenen Bereiche der Fasern und die Unterseite des Trägermaterials der Kalanderwalze zugewandt sind;
während des Führens des Trägermaterials mit den Fasern über den zumindest einen Teilbereich der Oberfläche der beheizten rotierenden Kalanderwalze:
   Übertragen von Wärme von der beheizten rotierenden Kalanderwalze zu dem Trägermaterial mit den Fasern, und
   Verschmelzen der verbundenen Bereiche der Fasern mit der Unterseite des Trägermaterials zu dem Kunstrasen; wobei das Verfahren weiterhin umfasst:
      Prägen einer Unterseite des Kunstrasens, wobei das Prägen einen vertieften Bereich der Unterseite des Kunstrasens bildet; und
      Abführen und Abkühlen des Kunstrasens.

Beispiel 2. Verfahren zur Herstellung eines Kunstrasens gemäß Beispiel 1,
wobei die Unterseite des Kunstrasens eine Hauptebene hat;
wobei die Hauptebene eine Ebene ist, die einen oder mehrere Oberflächenbereiche der Unterseite des Kunstrasens enthält;
wobei der eine oder die mehreren Oberflächenbereiche, die in der Hauptebene enthalten sind, eine Gesamtfläche haben, die mindestens 30% der Gesamtoberfläche der Unterseite des Kunstrasens ist; und
wobei der vertiefte Bereich vorzugsweise gegenüber der Hauptebene der Unterseite des Kunstrasens vertieft ist.

Beispiel 3. Verfahren zur Herstellung eines Kunstrasens gemäß Beispiel 1 oder 2, wobei der Kunstrasens an seiner Unterseite einen erhabenen Bereiche enthält;
wobei der erhabene Bereich eine Höhe von einer Ebene nach unten hat, wobei die Ebene einen oder mehrere Oberflächenbereiche der Unterseite des Kunstrasens enthält;
wobei sich der erhabene Bereich entlang einer Richtung an der Unterseite des Kunstrasens in einer Länge erstreckt;
wobei die Länge größer ist als der durchschnittliche Abstand zwischen zwei benachbarten Fasern; und
wobei das Prägen die Höhe des erhabenen Bereichs von der Ebene abschnittsweise verringert und/oder den erhabenen Bereich abschnittsweise unterbricht.

Beispiel 4. Verfahren zur Herstellung eines Kunstrasens gemäß einem der Beispiele 1 bis 3,
wobei das Prägen mehrere vertiefte Bereiche der Unterseite des Kunstrasens bildet,
wobei die vertieften Bereiche einen durchschnittlichen Abstand von höchstens 0,5 cm zueinander haben, höchstens 1 cm, höchstens 2 cm, oder höchstens 5 cm.

Beispiel 5. Verfahren zur Herstellung eines Kunstrasens gemäß einem der Beispiele 1 bis 4,
wobei eine maximale Höhe von Aufschiebungen des Trägermaterials des Kunstrasens an der Oberseite des Kunstrasens bei einer vorbestimmten Temperatur des Kunstrasens geringer ist als 2 cm, bevorzugt geringer als 1 cm, stärker bevorzugt geringer als 0,5 cm, noch stärker bevorzugt geringer als 0,1 cm,
wobei die vorbestimmte Temperatur mindestens 35°C ist, vorzugsweise mindestens 40°C, stärker bevorzugt mindestens 50°C, noch stärker bevorzugt mindestens 60°C, noch stärker bevorzugt mindestens 70°C,
wobei die Höhe eine Höhe von einem ebenen Oberflächenbereich der Oberseite des Trägermaterials des Kunstrasens ist,
wobei Aufschiebungen Oberflächenbereiche der Oberseite des Trägermaterials des Kunstrasens umfassen, die gegenüber einem ebenen Oberflächenbereich der Oberseite des Trägermaterials erhaben sind.

Beispiel 6. Verfahren zur Herstellung eines Kunstrasens gemäß einem der Beispiele 1 bis 5,
wobei die Kalanderwalze ein Prägewerk enthält und wobei die Unterseite des Kunstrasens mittels des Prägewerks der Kalanderwalze geprägt wird.

Beispiel 7. Verfahren zur Herstellung eines Kunstrasens gemäß einem der Beispiele 1 bis 5,
wobei der Kunstrasen mittels einer Kühlrolle abgekühlt wird,
wobei der Kunstrasen der Kühlrolle zugeführt wird,
wobei die Kühlrolle ein Prägewerk enthält und die Unterseite des Kunstrasens mittels des Prägewerks der Kühlrolle geprägt wird.

Beispiel 8. Verfahren zur Herstellung eines Kunstrasens gemäß einem der Beispiele 1 bis 5,
wobei das Verfahren ferner umfasst: Zuführen des Kunstrasens zu einer Prägewalze, die ein Prägewerk umfasst, wobei die Unterseite des Kunstrasens mittels des Prägewerks der Prägewalze geprägt wird,
wobei vor dem Prägen Wärme an den Kunstrasen übertragen wird und/oder wobei die Unterseite des Kunstrasens vor dem Abführen und Abkühlen des Kunstrasens geprägt wird.

Beispiel 9. Verfahren zur Herstellung eines Kunstrasens gemäß einem der Beispiele 1 bis 8, ferner umfassend:
Bereitstellen einer Folie;
Zuführen der Folie zwischen der Unterseite des Trägermaterials mit den verbundenen Bereichen der Fasern und der beheizten rotierenden Kalanderwalze bei dem Schritt des Zuführens des Trägermaterials und Verschmelzen der Folie mit der Unterseite des Trägermaterials und mit den verbundenen Bereichen der Fasern bei dem Schritt des Übertragens von Wärme wird, oder
Zuführen der Folie zwischen einer Unterseite des Kunstrasens und einer weiteren beheizten rotierenden Kalanderwalze nach dem Schritt des Abführens und Abkühlens des Kunstrasens, Übertragen von Wärme von der weiteren beheizten rotierenden Kalanderwalze zu der Unterseite des Kunstrasens und der Folie, Verschmelzen der Unterseite des Kunstrasens mit der Folie zu einem beschichteten Kunstrasen und Abführen und Abkühlen des beschichteten Kunstrasens.

Beispiel 10. Verfahren zur Herstellung eines Kunstrasens gemäß Beispiel 9,
wobei das Material der Folie mindestens eines folgenden Materialien umfasst:
   - Ethylen-Vinylacetat,
   - ein thermoplastische Elastomer, und
   - ein thermoplastisches Olefin;
wobei der Massenanteil von Ethylen-Vinylacetat, thermoplastischen Elastomeren und thermoplastischen Olefinen in Summe mindestens 50 % der Masse der Folie ausmacht, bevorzugt mindestens 60 %, 70 % oder 80 %, stärker bevorzugt mindestens 90%.

Beispiel 11. Verfahren zur Herstellung eines Kunstrasens gemäß Beispiel 9 oder 10, wobei die Folie eine erste Schicht, eine zweite Schicht und eine dritte Schicht umfasst,
wobei das Trägermaterial und die erste Schicht und die dritte Schicht aus im Wesentlichen derselben Materialart gebildet sind,
wobei die zweite Schicht recycelten Kunstrasenabfall umfasst.

Beispiel 12. Verfahren zur Herstellung eines Kunstrasens gemäß Beispiel 11,
wobei das Material der ersten Schicht mindestens eines folgenden Materialien umfasst:
   - Ethylen-Vinylacetat,
   - ein thermoplastische Elastomer, und
   - ein thermoplastisches Olefin;
wobei der Massenanteil von Ethylen-Vinylacetat, thermoplastischen Elastomeren und thermoplastischen Olefinen in Summe mindestens 50 % der Masse der ersten Schicht ausmacht, bevorzugt mindestens 60 %, 70 % oder 80 %, stärker bevorzugt mindestens 90%.

Beispiel 13. Verfahren zur Herstellung eines Kunstrasens gemäß einem der Beispiele 1 bis 12, umfassend:
Herstellung einer ersten und einer zweiten Kunstrasenbahn gemäß einem der vorstehenden Beispiele;
Bereitstellen einer Vlies-Bahn;
Auftragen eines flüssigen Klebers auf die Vlies-Bahn;
Verbinden der ersten und zweiten Kunstrasenbahn mit dem VVlies derart, dass die erste und zweite Kunstrasenbahn auf dem Vlies aufliegen und zueinander bündig sind.

Beispiel 14. Kunstrasen, umfassend:
ein Trägermaterial mit einer Oberseite und einer Unterseite;
eine Mehrzahl von Fasern, wobei jede Faser zwei Enden umfasst, welche sich von der Oberseite des Trägermaterials erstrecken, und einen verbundenen Bereich umfasst, welcher an der Unterseite des Trägermaterials schlaufenartig angeordnet ist;
wobei das Trägermaterial an der Unterseite mit den verbundenen Bereichen der Fasern verschmolzen ist;
wobei eine Unterseite des Kunstrasens eine Prägung enthält, in der ein vertiefter Bereich gebildet ist.

Beispiel 15. Kunstrasen gemäß dem vorstehenden Beispiel,
wobei der Kunstrasen gemäß einem der Beispiele 1 bis 13 hergestellt ist.

Beispiel 16. Vorrichtung zur Herstellung eines Kunstrasens mit einem Verfahren gemäß einem der Beispiele 1 bis 13, umfassend:
eine beheizbare und rotierbare Kalanderwalze,
Mittel zum Bereitstellen eines Trägermaterials mit einer Oberseite und einer Unterseite,
Mittel zum Bereitstellen von einer Mehrzahl von Fasern, wobei jede Faser zwei Enden umfasst, welche sich von der Oberseite des Trägermaterials erstrecken, und einen verbundenen Bereich umfasst, welcher an der Unterseite des Trägermaterials schlaufenartig angeordnet ist,
Mittel zum Zuführen des Trägermaterials mit den Fasern zu der Kalanderwalze,
Mittel zum Führen des Trägermaterials mit den Fasern über zumindest einen Teilbereich der Oberfläche der Kalanderwalze, wobei die verbundenen Bereiche der Fasern und die Unterseite des Trägermaterials der Kalanderwalze zugewandt sind,
Mittel zum Übertragen von Wärme von der Kalanderwalze zu dem Trägermaterial mit den Fasern während des Führens des Trägermaterials mit den Fasern über den zumindest einen Teilbereich der Oberfläche der Kalanderwalze,
Mittel zum Verschmelzen der verbundenen Bereiche der Fasern mit der Unterseite des Trägermaterials zu dem Kunstrasen während des Führens des Trägermaterials mit den Fasern über den zumindest einen Teilbereich der Oberfläche der Kalanderwalze,
Mittel zum Prägen einer Unterseite des Kunstrasens, wobei das Prägen einen vertieften Bereich der Unterseite des Kunstrasens bildet, und
Mittel zum Abführen und Abkühlen des Kunstrasens.

## Patentansprüche

1. Verfahren zur Herstellung eines Kunstrasens (2), umfassend die folgenden Schritte:
Bereitstellen eines Trägermaterials (21) mit einer Oberseite (OT) und einer Unterseite (UT);
Bereitstellen von einer Mehrzahl von Fasern (22), wobei jede Faser (22) zwei Enden (221) umfasst, welche sich von der Oberseite (OT) des Trägermaterials (21) erstrecken, und einen verbundenen Bereich (222) umfasst, welcher an der Unterseite (UT) des Trägermaterials (21) schlaufenartig angeordnet ist;
Bereitstellen einer Folie (23);
Bereitstellen eines Vlieses (24);
Zuführen des Trägermaterials (21) mit den Fasern (22) zu einer beheizten rotierenden Kalanderwalze (13), wobei die Folie (23) und das Vlies (24) zwischen der Unterseite (UT) des Trägermaterials (21) mit den verbundenen Bereichen (222) der Fasern (22) und der beheizten rotierenden Kalanderwalze (13) zugeführt werden;
Führen des Trägermaterials (21) mit den Fasern (22) über zumindest einen Teilbereich der Oberfläche der beheizten rotierenden Kalanderwalze (13), wobei die verbundenen Bereiche (222) der Fasern (22) und die Unterseite (UT) des Trägermaterials (21) der Kalanderwalze (13) zugewandt sind;
während des Führens des Trägermaterials (21) mit den Fasern (22) über den zumindest einen Teilbereich der Oberfläche der beheizten rotierenden Kalanderwalze (13):
Übertragen von Wärme von der beheizten rotierenden Kalanderwalze (13) zu dem Trägermaterial (21) mit den Fasern (22), und
Verschmelzen der verbundenen Bereiche (222) der Fasern (22), der Folie (23) und des Vlieses (24) mit der Unterseite (UT) des Trägermaterials (21) zu dem Kunstrasen (2); wobei das Verfahren weiterhin umfasst:
Prägen einer Unterseite (UR) des Kunstrasens (2), wobei das Prägen einen vertieften Bereich (40) der Unterseite (UR) des Kunstrasens (2) bildet; und
Abführen und Abkühlen des Kunstrasens (2).

2. Verfahren zur Herstellung eines Kunstrasens (2) gemäß Anspruch 1,
wobei in dem Schritt des Übertragens von Wärme und des Verschmelzens die geheizte Folie (23) in das Vlies (24) diffundiert, wodurch eine formschlüssige Verbindung hergestellt wird.

3. Verfahren zur Herstellung eines Kunstrasens (2) gemäß Anspruch 1 oder 2,
wobei die Folie (23) und das Vlies (24) als zwei separate Bahnen zugeführt werden.

4. Verfahren zur Herstellung eines Kunstrasens (2) gemäß einem der Ansprüche 1 bis 3, wobei das Vlies (24) nach dem Zuführen der Folie (23) zugeführt wird.

5. Verfahren zur Herstellung eines Kunstrasens (2) gemäß Anspruch 1 oder 2,
wobei die Folie (23) vor dem Schritt des Zuführens des Trägermaterials (21) mit dem Vlies (24) beschichtet ist, und/oder
wobei das Vlies (24) vor dem Schritt des Zuführens des Trägermaterials (21) auf der Folie (23) aufkaschiert ist.

6. Verfahren zur Herstellung eines Kunstrasens (2) gemäß Anspruch 5, wobei die Folie (23) und das Vlies (24) als Folien-/Vliesverbund zugeführt werden.

7. Verfahren zur Herstellung eines Kunstrasens (2) gemäß einem der Ansprüche 1 bis 6, wobei die Unterseite (UR) des Kunstrasens (2) eine Hauptebene (H) hat;
wobei die Hauptebene (H) eine Ebene ist, die einen oder mehrere Oberflächenbereiche der Unterseite (UR) des Kunstrasens (2) enthält;
wobei der eine oder die mehreren Oberflächenbereiche, die in der Hauptebene (H) enthalten sind, eine Gesamtfläche haben, die mindestens 30% der Gesamtoberfläche der Unterseite (UR) des Kunstrasens (2) ist; und
wobei der vertiefte Bereich (40) vorzugsweise gegenüber der Hauptebene (H) der Unterseite (UR) des Kunstrasens (2) vertieft ist.

8. Verfahren zur Herstellung eines Kunstrasens (2) gemäß einem der Ansprüche 1 bis 7, wobei der Kunstrasen (2) an seiner Unterseite (UR) einen erhabenen Bereich (50) enthält; wobei der erhabene Bereich (50) eine Höhe von einer Ebene nach unten hat, wobei die Ebene einen oder mehrere Oberflächenbereiche der Unterseite (UR) des Kunstrasens (2) enthält;
wobei sich der erhabene Bereich (50) entlang einer Richtung an der Unterseite (UR) des Kunstrasens (2) in einer Länge erstreckt;
wobei die Länge größer ist als der durchschnittliche Abstand zwischen zwei benachbarten Fasern (22); und
wobei das Prägen die Höhe des erhabenen Bereichs (50) von der Ebene abschnittsweise verringert und/oder den erhabenen Bereich (50) abschnittsweise unterbricht.

9. Verfahren zur Herstellung eines Kunstrasens (2) gemäß einem der Ansprüche 1 bis 8,
wobei das Prägen mehrere vertiefte Bereiche (40) der Unterseite (UR) des Kunstrasens (2) bildet,
wobei die vertieften Bereiche (40) einen durchschnittlichen Abstand von höchstens 0,5 cm zueinander haben, höchstens 1 cm, höchstens 2 cm, oder höchstens 5 cm.

10. Verfahren zur Herstellung eines Kunstrasens (2) gemäß einem der Ansprüche 1 bis 9, wobei die Kalanderwalze (13) ein Prägewerk (32) enthält und wobei die Unterseite (UR) des Kunstrasens (2) mittels des Prägewerks (32) der Kalanderwalze (13) geprägt wird, oder
wobei der Kunstrasen (2) mittels einer Kühlrolle (17) abgekühlt wird,
wobei der Kunstrasen (2) der Kühlrolle (17) zugeführt wird,
wobei die Kühlrolle (17) ein Prägewerk (32) enthält und die Unterseite (UR) des Kunstrasens (2) mittels des Prägewerks (32) der Kühlrolle (17) geprägt wird, oder
wobei das Verfahren ferner umfasst: Zuführen des Kunstrasens (2) zu einer Prägewalze (33), die ein Prägewerk (32) umfasst, wobei die Unterseite (UR) des Kunstrasens (2) mittels des Prägewerks (32) der Prägewalze (33) geprägt wird,
wobei vor dem Prägen Wärme an den Kunstrasen (2) übertragen wird und/oder wobei die Unterseite (UR) des Kunstrasens (2) vor dem Abführen und Abkühlen des Kunstrasens (2) geprägt wird.

11. Verfahren zur Herstellung eines Kunstrasens (2) gemäß einem der Ansprüche 1 bis 10,
wobei das Material der Folie (23) mindestens eines der folgenden Materialien umfasst:
• ein thermoplastisches Elastomer, und
• ein thermoplastisches Olefin;
wobei der Massenanteil von thermoplastischen Elastomeren und thermoplastischen Olefinen in Summe mindestens 50 % der Masse der Folie (23) ausmacht, bevorzugt mindestens 60 %, 70 % oder 80 %, stärker bevorzugt mindestens 90%.

12. Verfahren zur Herstellung eines Kunstrasens (2) gemäß einem der Ansprüche 1 bis 11, wobei die Folie (23) eine erste Schicht (231), eine zweite Schicht (232) und eine dritte Schicht (233) umfasst,
wobei das Trägermaterial (21) und die erste Schicht (231) und die dritte Schicht (233) aus im Wesentlichen derselben Materialart gebildet sind,
wobei die zweite Schicht (232) recycelten Kunstrasenabfall umfasst, und
wobei optional das Material der ersten Schicht (231) mindestens eines der folgenden Materialien umfasst:
• ein thermoplastisches Elastomer, und
• ein thermoplastisches Olefin;
wobei der Massenanteil von thermoplastischen Elastomeren und thermoplastischen Olefinen in Summe mindestens 50 % der Masse der ersten Schicht (231) ausmacht, bevorzugt mindestens 60 %, 70 % oder 80 %, stärker bevorzugt mindestens 90%.

13. Verfahren zur Herstellung eines Kunstrasens (2) gemäß einem der Ansprüche 1 bis 12, umfassend:
Herstellung einer ersten und einer zweiten Kunstrasenbahn gemäß einem der vorstehenden Ansprüche;
Bereitstellen einer Vlies-Bahn;
Auftragen eines flüssigen Klebers auf die Vlies-Bahn;
Verbinden der ersten und zweiten Kunstrasenbahn mit der Vlies-Bahn derart, dass die erste und zweite Kunstrasenbahn auf der Vlies-Bahn aufliegen und zueinander bündig sind.

14. Kunstrasen (2), umfassend:
ein Trägermaterial (21) mit einer Oberseite (OT) und einer Unterseite (UT);
eine Mehrzahl von Fasern (22), wobei jede Faser (22) zwei Enden (221) umfasst, welche sich von der Oberseite (OT) des Trägermaterials (21) erstrecken, und einen verbundenen Bereich (222) umfasst, welcher an der Unterseite (UT) des Trägermaterials (21) schlaufenartig angeordnet ist;
eine Folie (23) und ein Vlies (24);
wobei das Trägermaterial (21) an der Unterseite (UT) mit den verbundenen Bereichen (222) der Fasern (22) verschmolzen ist;
wobei die Folie (23) und das Vlies (24) mit der Unterseite (UT) des Trägermaterials (21) und mit den verbundenen Bereichen (222) der Fasern (22) verschmolzen sind; und
wobei eine Unterseite (UR) des Kunstrasens (2) eine Prägung enthält, in der ein vertiefter Bereich (40) gebildet ist.

15. Vorrichtung zur Herstellung eines Kunstrasens (2) mit einem Verfahren gemäß einem der Ansprüche 1 bis 13, umfassend:
eine beheizbare und rotierbare Kalanderwalze (13),
Mittel zum Bereitstellen eines Trägermaterials (21) mit einer Oberseite (OT) und einer Unterseite (UT),
Mittel zum Bereitstellen von einer Mehrzahl von Fasern (22), wobei jede Faser (22) zwei Enden (221) umfasst, welche sich von der Oberseite (OT) des Trägermaterials (21) erstrecken, und einen verbundenen Bereich (222) umfasst, welcher an der Unterseite (UT) des Trägermaterials (21) schlaufenartig angeordnet ist,
Mittel zum Bereitstellen einer Folie (23);
Mittel zum Bereitstellen eines Vlieses (24);
Mittel zum Zuführen des Trägermaterials (21) mit den Fasern (22) zu der Kalanderwalze (13), wobei die Folie (23) und das Vlies (24) zwischen der Unterseite (UT) des Trägermaterials (21) mit den verbundenen Bereichen (222) der Fasern (22) und der beheizten rotierenden Kalanderwalze (13) zugeführt werden;
Mittel zum Führen des Trägermaterials (21) mit den Fasern (22) über zumindest einen Teilbereich der Oberfläche der Kalanderwalze (13), wobei die verbundenen Bereiche (222) der Fasern (22) und die Unterseite (UT) des Trägermaterials (21) der Kalanderwalze (13) zugewandt sind,
Mittel zum Übertragen von Wärme von der Kalanderwalze (13) zu dem Trägermaterial (21) mit den Fasern (22) während des Führens des Trägermaterials (21) mit den Fasern (22) über den zumindest einen Teilbereich der Oberfläche der Kalanderwalze (13),
Mittel zum Verschmelzen der verbundenen Bereiche (222) der Fasern (22), der Folie (23) und des Vlieses (24) mit der Unterseite (UT) des Trägermaterials (21) zu dem Kunstrasen (2) während des Führens des Trägermaterials (21) mit den Fasern (22) über den zumindest einen Teilbereich der Oberfläche der Kalanderwalze (13),
Mittel zum Prägen einer Unterseite (UR) des Kunstrasens (2), wobei das Prägen einen vertieften Bereich (40) der Unterseite (UR) des Kunstrasens (2) bildet, und
Mittel zum Abführen und Abkühlen des Kunstrasens (2).
